# EUROPÄISCHE PATENTSCHRIFT

(11) **EP 2 640 779 B1**
(45) Veröffentlichungstag und Bekanntmachung des Hinweises auf die Patenterteilung: **05.08.2015**
(21) Anmeldenummer: 11775990.2
(22) Anmeldetag: 28.10.2011
(51) Int. Cl.: C08K 9/06, C09D 5/03, C09D 175/14

(54) **POLYURETHAN-BESCHICHTUNGSMITTEL, DARAUS HERGESTELLTE MEHRSCHICHTLACKIERUNGEN MIT MATTER OBERFLÄCHE SOWIE VERFAHREN ZUR HERSTELLUNG DER MEHRSCHICHTLACKIERUNGEN**
POLYURETHANE COATING COMPOSITION, MULTILAYER SURFACE COATINGS HAVING A MATT SURFACE PRODUCED THEREFROM AND PROCESSES FOR PRODUCING THE MULTILAYER SURFACE COATINGS
AGENT DE REVÊTEMENT À BASE DE POLYURÉTHANE, PEINTURES MULTICOUCHES À SURFACE MATE RÉALISÉES À PARTIR DE CELUI-CI ET PROCÉDÉ DE PEINTURE MULTICOUCHE

(30) Priorität: 18.11.2010 US 414959 P; 18.11.2010 EP 10191682
(43) Veröffentlichungstag der Anmeldung: 25.09.2013
(73) Patentinhaber: BASF Coatings GmbH, 48165 Münster (DE)
(72) Erfinder: GEBAUER, Beate, 48165 Münster (DE); MELZER, Julia, 48167 Münster (DE); WEIHER, Christian, 48165 Münster (DE); JANSSEN, Andreas, 48565 Steinfurt (DE); KRUMM, Holger, 48167 Münster (DE)
(74) Vertreter: Leifert & Steffan
(86) Internationale Anmeldenummer: PCT/EP2011/068958
(87) Internationale Veröffentlichungsnummer: WO 2012/065828

(56) Entgegenhaltungen:
- EP-A1- 1 431 338
- EP-A2- 1 607 448
- WO-A1-2010/054975
- DATABASE WPI Week 200718 Thomson Scientific, London, GB; AN 2007-182306 XP002667352, & KR 2006 0078970 A (KCC CO LTD) 5. Juli 2006 (2006-07-05)

## Beschreibung

Die vorliegende Erfindung betrifft thermisch härtbare Klarlacke auf Basis organischer Lösemittel enthaltend Polyole (A) und Vernetzungsmittel (B) mit gegenüber Hydroxylgruppen reaktiven Gruppen sowie mindestens ein Mattierungsmittel (M).

Schon seit einigen Jahren werden beispielsweise im Bereich der Automobillackierung vermehrt matte Oberflächen gewünscht. Beispielsweise werden bei Automobillackierungen in matten Silbertönen oder bei der Kombination von matten und glänzenden Autotellen durch die matten Oberflächen herausragende optische Effekte erzielt. Wie in der Pressemitteilung BASF Coatings setzt matte Klarlacke bei Kleinserien ein" der BASF Coatings GmbH vom 24.8.2010 beschrieben, werden matte Oberflächen dabei im Allgemeinen durch Zusatz von Mattierungsmitteln zu den Klarlacken erzielt.

Zur Mattierung von Beschichtungsmitteln können neben organischen Mattierungsmitteln, beispielsweise auf Basis von Kautschuk und/oder Wachsen, auch verschiedene anorganische Mattierungsmittel, insbesondere auf Basis von Silikaten, auf Basis von pyrogener Kieselsäure, auf Basis von Fällungskieselsäure und auf Basis von Kieselgel, zum Einsatz kommen. Die Mattierungsmittel können ggf. noch oberflächenmodifiziert sein, wobei zur Modifizierung verschiedene organische Komponenten, wie beispielsweise harte, mikrokristalline Wachse, piastifizierende, mikrokristalline Wachse und/oder Polyethylenwachse und/oder anorganische Komponenten, wie beispielsweise Polysiloxane, eingesetzt werden. Die verschiedenen Mattierungsmittel bzw. die mit verschiedenen Komponenten modifizierten Mattierungsmittel weisen jeweils verschiedene Eigenschaften bzw. Vor- und Nachteile auf.
Die Verarbeitung von mattierten Klarlacken stellt aber einen sehr anspruchsvollen Prozess dar. So neigen viele Mattierungsmittel zum Absetzen und Bildung eines Bodensatzes, der sich nur schwer oder gar nicht mehr aufrühren lässt. Zusätzlich zeigen die mattierten Klarlacke oft eine nur unzureichende Beständigkeit gegenüber Scherbelastungen, wie sie beispielsweise in Ringleitungen bei der Verwendung der Lacke in der Automobil-Serienlackierung auftreten. Diese unzureichende Beständigkeit gegenüber Scherbelastungen äußert sich dann in einer unerwünschten Glanzgraderhöhung der resultierenden Beschichtungen. Mattierte Klarlacke werden daher bisher nur in kleineren Ringleitungen für individuelle Serien eingesetzt. Aufgrund der zu erwartenden wachsenden Nachfrage nach matten Oberflächen besteht aber der Wunsch, die mattierten Klarlacke so zu verbessern, dass sie auch in der Standard-Serienlackierung einsetzbar sind.

Aus dem Artikel von M. L. Maule, J.M. Bogdanor in Surface Coatings Australia, 1994, Vol. 31, Seiten 6 - 10, ist es nun bekannt, dass beispielsweise die Sedimentationsstabilität durch eine Oberflächenbehandlung der Mattierungsmittel verbessert werden kann. Ferner ist dort beschrieben, dass die Mattierungswirkung im Allgemeinen umso größer ist, je höher die Teilchengröße des verwendeten Mattierungsmittels ist. Mit steigender Teilchengröße der Mattierungsmittel ist aber gleichzeitig auch eine erhöhte Rauhigkeit der Oberfläche bzw. eine erhöhte Neigung zu Stippenbildung verbunden.

In der EP-B-541 359 werden Mattierungsmittel auf Kieselsäure-Basis und deren Verwendung in Beschichtungsmitteln zur Herstellung von Beschichtungen mit einer matten Oberfläche beschrieben. Gemäß dieser Schrift ist es wesentlich, dass diese Mattierungsmittel auf Kieselsäure-Basis mit einer Mischung aus einem harten mikrokristallinen Wachs, einem weichmachenden mikrokristallinen Wachs und einem synthetischen Polyethylen-Wachs oberflächenbehandelt sind, wodurch die Mattierungsmittel - auch nach einer hohen Scherbelastung, z.B. beim Einarbeiten der Mattierungsmittel in das Beschichtungsmittel, - ein deutlich verbessertes Sedimentationsverhalten in dem Beschichtungsmittel aufweisen. Angaben, wie die mit einer Scherbelastung - insbesondere in Ringleitungen bei der Verwendung der Lacke in der Automobil -Serienlackierung - verbundene Glanzgraderhöhung der resultierenden Beschichtungen vermieden werden kann, fehlen hier jedoch ebenso wie Angaben, wie das sogenannte Prozessfenster verbessert werden kann, d.h. wie erreicht werden kann, dass sich der Glanzgrad der resultierenden Beschichtung möglichst wenig bei Änderungen der Applikations- und Aushärte-Bedingungen der Beschichtungsmittel ändert.

Als Beschichtungsmittel ist in der EP-B-541 359 beispielhaft nur ein Melamin-Alkydharz-Lack beschrieben, während andere Beschichtungsmittel, beispielsweise auf Polyurethan-Basis ebenso wenig beschrieben sind wie die Kombination der Mattierungsmittel auf Kieselsäure-Basis mit Rheologiehilfsmitteln auf Basis hydrophiler bzw. hydrophober Kieselsäure.

Aus der WO97/08250 sind ebenfalls Mattierungsmittel auf Basis wachsbeschichteter Kieselsäure beschrieben, bei denen es erfindungswesentlich ist, dass das Porenvolumen mindestens 1,5 cm³/g beträgt, der Wachsgehalt zwischen 6 und 15%, bezogen auf das Mattierungsmittel, liegt und das Wachs einen Schmelzpunkt von maximal 85°C hat. Diese Mattierungsmittel werden ausschließlich in UV härtenden Beschichtungsmitteln eingesetzt und weisen dort den Vorteil auf, dass sie sowohl eine gute Mattierungswirkung zeigen als auch gleichzeitig weder die Rheologie der Beschichtungsmittel negativ beeinflussen noch die optischen Eigenschaften der resultierenden Beschichtung verschlechtern.

Weiterhin ist es aus der EP-B-922 671 bekannt, dass Mattierungsmittel auf Basis von Fällungskieselsäure eine bestimmte Teilchengrößenverteilung aufweisen sollten, um einerseits eine gute Mattierungswirkung zu erzielen und andererseits aber auch das Appearance der resultierenden Beschichtung nicht negativ zu beeinflussen. Allerdings werden in dieser Schrift weder Mattierungsmittel auf Basis von Kieselgelen eingesetzt noch ist die Oberflächenmodifizierung der Mattierungsmittel beschrieben. Ebenso wenig wird die Kombination der Mattierungsmittel mit Rheologiehilfsmitteln auf Basis hydrophober Kieselsäure beschrieben. Bekanntermaßen neigen jedoch unmodifizierte Kieselsäuren in Lacken zu starker Sedimentation und sind damit nur noch schwer oder gar nicht mehr aufrührbar und auch die Stabilität gegenüber Scherbelastungen ist unzureichend.

Wie bereits ausgeführt, ist es zwar bekannt, dass mit Wachs, insbesondere mit Polyethylenwachs, belegte Mattierungsmittel auf Basis von Fällungskieselsäure ein wesentlich verbessertes Sedimentationsverhalten aufweisen als die entsprechenden, nicht oberflächenmodifizierten Mattierungsmittel. Jedoch verursachen diese mit Wachs modifizierten Mattierungsmittel häufig eine Trübung des Lackes. Gemäß der EP-B-1 477 457 wird dies dadurch vermieden, dass die Mattierungsmittel auf Basis von Fällungskieselsäure anstatt mit Wachs mit einem - ggf. modifizierten - Polysiloxan hydrophob oberflächenmodifiziert werden. Diese speziellen Mattierungsmittel werden in Klarlacken eingesetzt, wobei beispielhaft nur ein Klarlack auf Basis eines Harnstoff-Formaldehydharzes aufgeführt wird. Andere Klarlacke, wie beispielsweise Polyurethanlacke auf Basis von hydroxylgruppenhaltigen Bindemitteln und Isocyanat-Vernetzern, sind hier jedoch nicht beschrieben. Schließlich fehlen auch hier Angaben, wie die mit einer Scherbelastung verbundene Glanzgraderhöhung der resultierenden Beschichtungen vermieden werden kann ebenso wie Angaben zur Verbesserung des sogenannten Prozessfensters.

Aus der EP-B-1 171 531 sind strahlenhärtbare Beschichtungsmittel zur Herstellung matter Beschichtungen bekannt, die als Mattierungsmittel mit Wachs modifizierte Kieselgele enthalten, bei denen der Wachsgehalt zwischen 15 und 30 %, bezogen auf die Mattierungsmittelgesamtzusammensetzung, beträgt, das Kieselgel ein Porenvolumen von 0,8 bis 1,4 cm³/g aufweist und die mittlere Teilchengröße zwischen 2 und 12 µm liegt. Diese Mattierungsmittel sind für strahlenhärtbare Beschichtungsmittel sehr effizient und beeinflussen die Rheologie der strahlenhärtbaren Beschichtungsmittel nicht negativ. Die Kombination dieser speziellen Mattierungsmittel mit Rheologiehilfsmitteln auf Basis hydrophober Kieselsäuren ist hier aber ebenso wenig beschrieben wie der Einsatz der Mattierungsmittel in thermisch härtenden Beschichtungsmitteln.

Schließlich beschreibt die EP-B-1 591 492 2K-Beschichtungsmittel, enthaltend eine Polyol-Komponente, einen Polyisocyanat-Vernetzer und mindestens ein Mattierungsmittel. Als Mattierungsmittel können in den Beschichtungsmitteln alle bekannten, oberflächenbehandelten oder unbehandelten, organischen oder anorganischen Mattierungsmittel eingesetzt werden. Die Beschichtungsmittel werden zur Herstellung von Mehrschichtlackierungen mit einem sehr guten, speziellen Effekt, wie z.B. einem matten metallischen, chrom-ähnlichen Aussehen, eingesetzt. Wesentlich zur Herstellung der Mehrschichtlackierungen gemäß der EP-B-1 591 492 ist daher die Verwendung von zwei verschiedenen Basislacken, wobei der erste Basislack ein üblicherweise verwendeter Basislack ist und der zweite Basislack spezielle, sogenannte PVD (Physical Vapour Deposition) - Aluminiumpigmente zur Erzielung eines metallischen Effektes enthält.

### Aufgabe

Der vorliegenden Erfindung lag daher die Aufgabe zugrunde, Beschich, tungsmittel, erfindungsgemäß Klarlacke, zur Verfügung zu stellen, die eine gute Ringleitungsstabilität zeigen, d.h. die keine Erhöhung des Glanzgrades der gehärteten Beschichtung durch die bei der Automobil-Standardserienlackierung (OEM Serienlacklerung) auftretende Scherbelastung der Beschichtungsmittel bei der Applikation der Beschichtungsmittel in der Linie zur Folge haben. Geprüft wird diese Scherbelastung dadurch, dass die Beschichtungsmittel in einer Ringleitung umgepumpt und dabei einer Scherbelastung ausgesetzt werden, wobei folgende Bedingungen gegeben sind:
Druck am Rücklaufkontrollventil: 10 bar
Doppelhübe pro Minute: 18
Volumen (Doppelhub): 0,6 I
Vor der Scherbelastung in der Ringleitung (TO = 0) und nach jeweils 500, 1250, 1500 und 2000 Durohläufen (Turn Over = TO) in der Ringleitung wird der Glanzgrad bei 60° der Beschichtungen gemessen. Eine ausreichende Ringleitungsstabilität der Beschichtungsmittel ist dann gegeben, wenn der Glanzgrad in einem Winkel von 60° um maximal 10 Glanzeinheiten nach Scherung durch Umpumpen in der Ringleitung erhöht wird.

Außerdem sollten Beschichtungsmittel zur Verfügung gestellt werden, die eine gute Sedimentationsstabilität aufweisen, d.h. dass auch nach längerer Lagerung von 3 Monaten der Beschichtungsmittel bei Umgebungstemperatur keine Bildung eines Bodensatzes auftritt, der sich innerhalb von maximal 1 h mit einem üblichen Labormischer (Insbesondere Vollrath 370W, Typ , EWTHV 0,5" der Firma Paul Vollrath GmbH & CO. KG, Hürth, Drehzahl 800 Umdrehungen pro Minute, Lenartscheibe d = 90 mm) mit einer Drehzahl von 800 Umdrehungen pro Minute nur noch schwer oder gar nicht mehr aufrühren lässt.

Ferner sollten die Beschichtungsmittel mit einem sogenannten erweiterten Prozessfenster verarbeitbar sein. Dies bedeutet, dass Glanzgradschwankungen oder fleckige Oberflächen In Abhängigkeit von den Applikationsbedingungen des OEM-Mehrschichtaufbaus vermieden werden sollten. Insbesondere sollte der Glanzgrad der resultierenden Beschichtung bei pneumatischer Applikation und ESTA Applikation in etwa gleich sein. Ferner sollten die Trocknungsbedingungen des Basislackes ebenso wie die Ablüfrzelt der Klarlackschicht - falls überhaupt - einen nur geringen Einfluss auf den Glanzgrad der Mehrschichtlackierung haben.

Weiterhin sollten die Beschichtungen und Lackierungen, erfindungssgemäß die Klarlackierungen, - Je nach Verwendungszweck ein gutes Appearance zeigen. Dies ist eine wesentliche Voraussetzung für die Verwendung der Klarlackierungen, in dem technologisch und ästhetisch besonders anspruchsvollen Gebiet der Automobilserienlackierung (OEM).

Darüber hinaus sollten die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden Klarlacke auf Basis organischer Lösemittel gefunden, enthaltend mindestens eine hydroxylgruppenhaltige Verbindung (A), mindestens ein Vernetzungsmittel (B) mit gegenüber Hydroxylgruppen reaktiven Gruppen sowie mindestens ein Mattierungsmittel (M) auf Kieselgel-Basis, das dadurch gekennzeichnet ist, dass
(i) das Mattierungsmittel (M) auf Kieselgel-Basis mit einem oder mehreren Wachsen oberflächenmodifiziert ist
   und
(ii) der Klarlack zusätzlich mindestens ein Rheologiehilfsmittel (R) auf Basis hydrophober Kieselsäure, hergestellt durch die Oberflächenmodifizierung von pyrogenem Siliciumdioxid mit hydrophobe Gruppen enthaltenden Verbindungen, enthält.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Klarlacks auf Basis organischer Lösemittel gelöst werden konnten.

So ist es insbesondere überraschend, dass die erfindungsgemäßen Klarlacke eine gute Ringleitungsstabilität zeigen, d.h. sie keine Erhöhung des Glanzgrades der gehärteten Beschichtung um mehr als 10 Glanzeinheiten nach Scherung durch Umpumpen der Beschichtungsmittel in einer Ringleitung (unter den Bedingungen von10 bar Druck am Rücklaufkontrollventil, 18 Doppelhüben pro Minute und einem Volumen (Doppelhub) von 0,6 I) zur Folge haben. Dabei wird der Glanzgrad bei 60° der Beschichtungen vor der Scherbelastung in der Ringleitung (TO = 0) und nach jeweils 500, 1250, 1500 und 2000 Durchläufen (Tum Over = TO) in der Ringleitung gemessen.

Außerdem weisen die Klarlacke eine gute Sedimentationsstabilität auf, d.h. dass auch nach längerer Lagerung von 3 Monaten der Klarlacke bei Umgebungstemperatur keine Bildung eines Bodensatzes auftritt, der sich innerhalb von maximal 1 h mit einem üblichen Labormischer (insbesondere Vollrath 370W, Typ " EWTHV 0,5" der Firma Paul Vollrath GmbH & CO. KG, Hürth, Drehzahl 800 Umdrehungen pro Minute, Lenartscheibe d = 90 mm) mit einer Drehzahl von 800 Umdrehungen pro Minute nur noch schwer oder gar nicht mehr aufrühren lässt.

Gerade im Bereich der Automobillackierung ist es von besonderem Vorteil, dass die erfindungsgemäßen Klarlacke mit einem sogenannten erweiterten Prozessfenster verarbeitbar sind. Dies bedeutet, dass Glanzgradschwankungen oder fleckige Oberflächen in Abhängigkeit von den Applikationsbedingungen des OEM-Mehrschichtaufbaus vermieden werden. Insbesondere ist der Glanzgrad der resultierenden Beschichtung bei pneumatischer Applikation und ESTA Applikation in etwa gleich. Ferner haben die Trocknungsbedingungen des Basislackes ebenso wie die Ablüftzeit der Klarlackschicht - falls überhaupt - einen nur geringen Einfluss auf den Glanzgrad der Mehrschichtlackierung.

Ferner ist es überraschend, dass die Klarlacke zu Beschichtungen mit einem guten Appearance führen. Dies ist eine wesentliche Voraussetzung für die Verwendung der Beschichtungen und Lackierungen, erfindungsgemäß der Klarlackierungen, in dem technologisch und ästhetisch besonders anspruchsvollen Gebiet der Automobilserienlackierung (OEM).

Ferner können mit den erfindungsgemäßen Klarlacken Beschichtungen erhalten werden, deren Glanzgrad gezielt eingestellt werden kann.

Die erfindungsgemäßen Komponenten können schließlich besonders einfach und sehr gut reproduzierbar hergestellt werden und bereiten bel der Lackapplikation keine signifikanten toxikologischen und ökologischen Probleme.

### Beschreibung der Erfindung

### Das erfindungswesentliche Mattlerungsmittel (M)

Es ist erfindungswesentlich, dass die Beschichtungsmittel ein oder mehrere Mattierungsmittel auf Kieselgel-Basis enthalten. Dadurch ist gewährleistet, dass die Klarlacke die geforderte Ringleitungsstabilität aufweisen, d.h. dass die bei der OEM-Lackierung auftretende Scherbelastung der

Beschichtungsmittel bei der Applikation der Beschichtungsmittel in der Linie keine Erhöhung des Glanzgrades der gehärteten Beschichtung zur Folge hat. Zusätzlich zeigen diese speziellen Mattierungsmittel eine sehr gute Sedimentationsstabilität.

Diese Mattierungsmittel (M) auf Kieselgel-Basis werden bekanntermaßen aus Wasserglas durch Umsetzung mit Mineralsäuren und Polykondensation der Kieselsäuren mit anschließendem Auswaschen der entstandenen Salze hergestellt. Die Herstellung derartiger Kieselgele ist beispielsweise auch in der EP-B-1 171 531, Seite 3, Absatz [0016] beschrieben.

Die erfindungsgemäß eingesetzten Mattierungsmittel (M) sind dabei mit einem oder mehreren Wachsen oberflächenmodifiziert. Gegenüber unmodifizierten Mattierungsmitteln auf Kieselgel-Basis weisen diese erfindungsgemäß verwendeten Mattierungsmittel (M) den Vorteil auf, dass die entsprechenden Klarlacke eine deutlich bessere Sedimentationsstabilität aufweisen als Klarlacke, die unmodifizierte Kieselgel-Mattierungsmittel enthalten.

Im Zusammenhang mit der vorliegenden Erfindung werden unter "Wachs" alle natürlichen und künstlich gewonnenen Stoffe verstanden, die folgende Eigenschaften aufweisen:
1. Bei 20°C knetbar, fest bis brüchig hart.
2. Grob- bis feinkristallin, durchscheinend bis opak, jedoch nicht glasartig.
3. Oberhalb 40°C ohne Zersetzung schmelzend.
4. Schon wenig oberhalb des Schmelzpunktes verhältnismäßig niedrigviskos.
5. Stark temperaturabhängig in Konsistenz und Löslichkeit.
6. Unter leichtem Druck polierbar.

Erfüllt ein Stoff mehr als eine dieser Eigenschaften nicht, ist er kein "Wachs" mehr im Sinne dieser Erfindung (vgl. Ullmanns Enzyklopädie der technischen Chemie; 4. neubearbeitete und erweiterte Auflage; Verlag Chemie; Weinheim; Deerfield Beach, Florida; Basel, 1983, Seite 3).

Die Wachse können modifiziert und/oder unmodifiziert sein. Geeignet sind alle an sich bekannten und üblichen Wachse, wobei aber bevorzugt synthetische Wachse eingesetzt werden.

Die Wachse haben gewöhnlich ein zahlenmittleres Molekulargewicht zwischen 100 und 10.000, bevorzugt zwischen 300 und 1200 und vorzugsweise Tropfpunkte zwischen 50 und 180 °C, bevorzugt zwischen 60 und 120 °C.

Bevorzugt werden erfindungsgemäß Mattierungsmittel (M) auf Kieselgel-Basis eingesetzt, die mit einem oder mit mehreren verschiedenen ggf. modifizierten Polyolefinwachsen, wie Polyethylen- und Polypropylenwachse, Polyethylenglykolwachse, modifiziert sind. Die Polyethylen- und Polypropylenwachse sind entweder Homo- oder Copolymere mit üblicherweise 0,5 bis 40 Gew.- % Comonomereinheiten, die sich von gesättigten oder ungesättigten Monocarbonsäuren oder deren Amiden oder Estern herleiten. Beispiele solcher Comonomereinheiten sind u.A. die Reste von Acrylsäure, Methacrylsäure, Maleinsäure, Fumarsäure, Acrylamid, Stearinsäure oder Stearinsäureamid oder Vinylacetat. Die Polyolefinwachse sind im Handel unter vielfältigen Bezeichnungen erhältlich.

Besonders bevorzugt werden erfindungsgemäß Mattierungsmittel (M) auf Kieselgel-Basis eingesetzt, die mit einem oder mit mehreren verschiedenen Polyolefinwachsen, insbesondere mit einem oder mit mehreren verschiedenen linearen unverzweigten Polyolefinwachsen und ganz besonders bevorzugt mit einem oder mit mehreren verschiedenen Polyethylenwachsen, modifiziert sind.

Die Oberflächenmodifizierung kann beispielsweise dadurch erfolgen, dass das Mattierungsmittel mit dem geschmolzenen Wachs vermahlen wird, wie dies in der EP-B-1 171 531, Seite 4, Absätze [0018] und [0019] beschrieben ist. Ebenfalls bevorzugt werden erfindungsgemäß Mattierungsmittel (M) auf Kieselgel-Basis eingesetzt, bei denen der Wachsgehalt zwischen 3 und 20 Gew.-%, bevorzugt zwischen 5 und 15 Gew.-%, jeweils bezogen auf das Gesamtgewicht des Mattierungsmittels, beträgt.

Aus dem Artikel von Maule ML; Bogdanor JM " Matting agents: " Quality considerations" in Surface Coatings Australia 1994, 31(3), Seiten 6 bis 10, ist es bekannt, dass Mattierungsmittel im Allgemeinen eine um so größere Mattierungswirkung zeigen, je höher die mittlere Teilchengröße der Mattierungsmittel ist. Allerdings nimmt auch die Neigung zu Stippenbildung der Beschichtungen mit steigender mittlerer Teilchengröße der Mattierungsmittel zu.

Es ist daher bevorzugt, dass die in den Beschichtungsmitteln eingesetzten Mattierungsmittel (M) eine mittlere Teilchengröße von 4 bis 14 µm, bevorzugt von 5 bis 13 µm und besonders bevorzugt von 6 bis 12 µm aufweisen. Die mittlere Teilchengröße - angegeben als sogenannter d50-Wert (d.h. dass 50 Volumenprozent der Teilchen eine Teilchengröße unter der angegebenen mittleren Teilchengröße aufweisen) - wird dabei entsprechend der Norm für Laserbeugungsmessungen ISO 13320-1 jeweils bestimmt an einer Dispersion der Teilchen in Butylacetat (Brechungsindex: 1,462) durch Laser-Lichtstreuung bei Raumtemperatur (23°C) mit einem Malvern Mastersizer 2000 der Firma Malvern Instruments mit der Mini-Dispergiereinheit MS1 mit 2000 Umdrehungen pro Minute und Auswertung nach Fraunhofer. Dies ist beispielsweise auch in der EP-B-1 171 531 auf Seite 5, Zeilen 1 bis 7 beschrieben.

Ferner weist das Mattierungsmittel (M) bevorzugt ein Porenvolumen von 1,2 bis 2,5 ml/g und besonders bevorzugt von 1,8 bis 2,0 ml/g. Das Porenvolumen wird dabei mittels der Standard Stickstoff Adsorptionsmethode nach Brunauer, Emmett und Teller (BET) mittels eines ASAP 2400 Gerätes der Firma Micometrics bestimmt, wie dies in der EP-B-1 171 531 auf Seite 4, Abschnitt [0027], Punkt A beschrieben ist. Im Allgemeinen steigt dabei mit steigendem Porenvolumen des Mattierungsmittels die Menge des Mattierungsmittels, die in das Beschichtungsmittel eingearbeitet werden kann, so dass auch Beschichtungsmittel mit einer sehr hohen Mattierung erreicht werden können.

Geeignete Mattierungsmittel (M) sind auch beispielsweise die im Handel unter dem Namen Syloid ® der Firma W.R. Grace GmbH & Co. KG erhältlichen Mattierungsmittel, wie beispielsweise Syloid ® 162 C, Syloid ® ED 30, Syloid ® ED 40, Syloid ® ED 44, Sylold ® ED 50, Syloid ® ED 52, Syloid ® ED 56, Syloid ® C 906, Sylold ® C 907 und Syloid ® ED 80.

Es ist selbstverständlich auch möglich, eine Mischung aus zwei verschiedenen oder mehreren verschiedenen Mattierungsmitteln einzusetzen.
Die Klarlacke enthalten bevorzugt 2 bis 20 Gew.-%, jeweils bezogen auf die nicht flüchtigen Bestandteile des Klarlacks, mindestens eines Mattierungsmittels (M). Zweikomponentige Klarlacke enthalten besonders bevorzugt 8 bis 17 Gew.-%, ganz besonders bevorzugt 10 bis 15 Gew.-%, mindestens eines Mattierungsmittels (M) und einkomponentige Klarlacke enthalten besonders bevorzugt 4 bis 14 Ges.-%, ganz besonders bevorzugt 6 bis 11 Gew.-%, jeweils bezogen auf die nicht flüchtigen Bestandteile des Klarlacks, mindestens eines Mattierungsmittels (M),

### Das Rheologiehilfsmittel (R)

Es ist erfindungswesentlich, dass die Klarlacke zusätzlich mindestens ein Rheologiehilfsmittel (R) auf Basis hydrophober Kieselsäure enthalten, hergestellt durch die Oberflächenmodifizierung von pyrogenem Siliciumdioxid mit hydrophobe Gruppen enthaltenden Verbindungen.

Siliciumdioxid bzw. Kieselsäure ist als solche hydrophil. Beispiele für geeignete Rheologiehilfsmittel (R) auf Basis hydrophober Kieselsäure sind Umsetzungsprodukte von pyrogenem Siliciumdioxid mit Verbindungen mit hydrophoben Gruppen, insbesondere mit orgenofunktionellen SiliciumVerbindungen (I) mit mindestens einer gegenüber den hydrophilen Gruppen des pyrogenen Siliciumdioxids reaktiven funktionellen Gruppe (Ia) und mit mindestens einem hydrophoben Rest (Ib). Bevorzugt haben die Verbindungen (I) keine weiteren, gegenüber den weiteren Bestandteilen des Beschichtungsmittels reaktiven Gruppen, insbesondere keine weiteren, gegenüber den Bindemitteln und/oder Vernetzern reaktive Gruppen.

Besonders bevorzugt werden als Verbindungen (I) organofunktionelle Siliciumverbindungen mit mindestens einer Alkylgruppe mit 1 bis 50 C-Atomen, insbesondere mit 1 bis 10 C-Atomen, und mit mindestens einer hydrolysierbaren Gruppe bzw. mit mindestens einer OH- bzw. NH-Gruppe eingesetzt. Beispiele für Verbindungen (I) sind Alkylalkoxysilane, insbesondere Dialkyldialkoxysilane und Alkyltrialkoxysilane, Alkylhalogensilane, insbesondere Alkylchlorsilane, bevorzugt Trialkylchlorsilane und Dialkyldichlorsilane, Alkylpolysiloxane, Dialkylpolysiloxane und Alkyldisilazane u.Ä. Geeignet als Verbindung (I) sind auch verschiedene monomere und/oder oligomere Kieselsäureester, die Methoxy-, Ethoxy- oder n- bzw. i-Propoxygruppen haben und einen Oligomerisierungsgrad von 1 bis 50, insbesondere 2 bis 10, ganz besonders bevorzugt von 3 bis 5 aufweisen. Beispiele für geeignete organofunktionelle Verbindungen (I) sind auch die in der DE-A-100 49 628 beschriebenen organofunktionellen Siliciumverbindungen. Beispiele für geeignete Verbindungen (I) sind ferner die im Handel erhältlichen und bekannten Produkte, die beispielsweise von der Firma Hüls unter der Marke DYNASILAN® vertrieben werden.
Besonders bevorzugt werden als Verbindungen (I) Dimethyldichlorsilan und/oder Hexamethyldisilazan und/oder Octyltrimethoxysilan und/oder Dimethylpolysiloxan eingesetzt.
Ganz besonders bevorzugt werden als Rheologiehilfsmittel (R) auf Basis hydrophober Kieselsäure Reaktionsprodukte von SiO2 und Dimethyldichlorsilan und/oder Hexamethyldisilazan, insbesondere Reaktionsprodukte von SiO2 und Dimethyldichlorsilan, eingesetzt.

Es ist bevorzugt, dass das Rheologiehilfsmittel (R) auf Basis hydrophober Kieselsäure eine BET-Oberfläche von 35 bis 350 m2/g, bevorzugt von 100 bis 300 m2/g, aufweist. Die BET-Oberfläche wird dabei entsprechend DIN 66 131 bestimmt.

Das Rheologiehilfsmittel (R) auf Basis hydrophober Kieselsäure hat üblicherweise eine Primär-Teilchengröße von 2 bis 40 nm, bevorzugt von 5 bis 20 nm. Die Primärteilchengröße wird dabei aus der BET Oberfläche rechnerisch unter der Annahme einer sphärischen Morphologie ermittelt.

Geeignete Rheologiehilfsmittel (R) sind auch beispielsweise die Im Handel unter dem Namen Aerosil ® der Firma Degussa erhältlichen hydrophoben Kieselsäuren, wie beispielsweise Aerosil ® R202, Aerosil ® R805, Aerosil ® R 812, Aerosil ® R812S, Aerosil ® R972, Aerosil ® R974 und Aerosil ® R 976.

Es ist selbstverständlich auch möglich, eine Mischung aus zwei oder mehreren verschiedenen Rheologiehilfsmitteln (R) einzusetzen.

Die erfindungsgemäßen Klarlacke enthalten bevorzugt 0, 01 bis 3,0 Gew.-%, besonders bevorzugt 0,05 bis 1,5 Gew.-% und insbesondere 0,1 bis 1,0 Gew.-%, jeweils bezogen auf die nicht flüchtigen Bestandteile des Beschichtungsmittels, zusätzlich mindestens eines Rheologiehiltsmittels (R).

Selbstverständlich können in dem erfindungsgemäßen Klarlack zusammen mit dem oder mit den Rheologiehilfsmittel(n) (R) auf Basis hydrophober Kieselsäure auch noch weitere übliche Rheologiehilfsmittel, z.B. auf Basis hydrophiler Kieselsäure oder auf Harnstoff-Basis, eingesetzt werden.

### Das Vernetzungsmittel (B)

Als Komponente (B) enthalten die erfindungsgemäßen Klarlacke mindestens eine Verbindung mit gegenüber Hydroxylgruppen reaktiven Gruppen. Als Vernetzungsmittel können dabei alle üblicherweise eingesetzten Vernetzungsmittel, die gegenüber Hydroxylgruppen reaktive Gruppen aufweisen, eingesetzt werden. Beispiele für geeignete Vernetzungsmittel sind anhydridfunktionelle Verbindungen, Aminoplastharze, Tris-(Alkoxycarbonylamino)triazine und deren Derivate, Verbindungen mit freien, d.h. unblockierten, und/oder blockierten Isocyanatgruppen und/oder epoxyfunktionelle Verbindungen. Dabei können auch Mischungen verschiedener Vernetzungsmittel (B) eingesetzt werden.

Beispielsweise sind als Komponente (B) Aminoplastharze und/oder Epoxyharze, verwendbar. Bevorzugt sind dabei aliphatische Epoxyharze, welche eine hohe Witterungsstabilität aufweisen. Solche Epoxyharze sind beispielsweise In der Monographie von B.Ellis" Chemistry and Technology of Epoxy Resins" (Blackie Academic & Professional, 1993, Seiten 1 bis 35) beschrieben. Als Komponente (B) kommen auch anstelle der Epoxyharze oder zusammen mit den Epoxyharzen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Als Komponente (B) können auch Tris(Alkoxycarbonylamino)triazine und deren Derivate eingesetzt werden. Geeignete Tris(Alkoxycarbonylamino)triazine sind beispielsweise in der US-A-4, 939,213, Spalte 2, Zeile 33, bis Spalte 7, Zeile 63, der US-A-5,084,541, Spalte 2, Zeile 51, bis Spalte 7, Zeile 63, und der EP-A-624 577, Spalte 3, Zeile 33, bis Spalte 16, Zelle 5, beschrieben. Geeignete Tris(Alkoxycarbonylamino)triazine sind auch im Handel unter der Bezeichnung Larotact® LR 9018 der Firma BASF S.E. erhältlich.

Bevorzugt enthalten die erfindungsgemäßen Klarlacke als Vernetzungsmittel (B) eine oder mehrere Verbindungen mit freien, d.h. unblockierten, und/oder blockierten Isocyanatgruppen und/oder Aminoplastharze und/oder Tris-(Alkoxycarbonylamino)triazine.

Bevorzugt enthalten die erfindungsgemäßen Klarlacke Verbindungen (B) mit freien und/oder blockierten Isocyanatgruppen, ggf. zusammen mit weiteren Vernetzungsmittein, insbesondere mit Aminoplastharzen und/oder Tris-(Alkoxycarbonylamino)triazinen. Verbindungen (B) mit blockierten Isocyanatgruppen werden bevorzugt dann eingesetzt, wenn die erfindungsgemäßen Klarlacke als einkomponentige (1K) Systeme eingesetzt werden.

Beispiele für bevorzugte Verbindungen (B) sind an sich bekannte substituierte oder unsubstituierte aromatische, aliphatische, cycloaliphatische und/oder heterocyclische Polyisocyanate, wobei bevorzugt aliphatische und/oder cycloaliphatische Polyisocyanate eingesetzt werden. Beispiele für bevorzugte aliphatische und/oder cycloaliphatische Polyisocyanate sind: Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat,, Hexahydrophenylen-1,4-diisocyanat, Perhydrodiphenylmethan-2,4' -diisocyanat, 4,4' -Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate.

Weiterhin bevorzugte Verbindungen (B) sind die Dimeren und Trimeren, insbesondere die Biuret-Dimere und die Isocyanurat-Trimere der vorgenannten Diisocyanate.

Besonders bevorzugte Verbindungen (B) sind Hexamethylen-1,6-diisocyanat, Isophorondiisocyanat und 4,4' -Methylendicyclohexyldiisocyanat, deren Biuret-Dimere und/oder Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

### Die hydroxylgruppenhaltige Verbindung (A)

Als hydroxylgruppenhaltige Verbindung (A) werden vorzugsweise oligo- und/oder polymere Polyole eingesetzt. In untergeordneten Anteilen können der oligo- und/oder polymeren Polyolkomponente (A) niedermolekulare Polyole beigemischt werden.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerytritol sowie Dipentaerytritol, eingesetzt.
Die bevorzugten oligo- und/oder polymeren Polyole (A) weisen massenmittlere Molekulargewichte Mw > 500 Dalton, gemessen mittels GPC (Gelpermeationschromatographie), bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole und insbesondere Polyacrylatpolyole und/oder Polymethacrylatpolyole sowie deren Mischpolymerisate, im folgenden Polyacrylatpolyole genannt.

Die Polyole weisen bevorzugt eine OH-Zahl von 80 bis 250 mg KOH/g, insbesondere zwischen 100 und 220 KOH/g und besonders bevorzugt von 150 bis 200 mgKOH/g, auf.

Die Glasübergangstemperaturen, gemessen per DSC (Differential-Thermoanalyse) nach DIN-EN-ISO 11357-2, der Polyole liegen bevorzugt zwischen-150 und 100 °C, besonders bevorzugt zwischen -120°C und 80°C.

Geeignete Polyesterpolyole sind beispielsweise in EP-A-0 994 117 und EP-A-1 273 640 beschrieben.

Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur Tg der Polyacrylatpolyole liegt in der Regel zwischen -100 und 100 °C. Die Glasübergangstemperatur wird mit Hilfe von DSC-Messungen nach DIN-EN-ISO 11357-2 bestimmt.

Die Polyacrylatpolyole weisen bevorzugt eine OH-Zahl von 80 bis 250 mg KOH/g, insbesondere zwischen 100 und 220 KOH/g und besonders bevorzugt von 150 bis 200 mgKOH/g, auf.

Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Polyacrylatpolyole (A) weisen bevorzugt eine Säurezahl zwischen 0 und 30 mg KOH/g auf. Die Säurezahl gibt hierbei die Anzahl der mg Kaliumhydroxid an, die zur Neutralisation von 1 g der jeweiligen Verbindung der Komponente (b) verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2-Hydroxypropylmethacrylat, 3-Hydroxypropylacrylat, 3-Hydroxypropylmethacrylat , 3-Hydroxybutylacrylat, 3-Hydroxybutylmethacrylat sowie insbesondere 4-Hydroxybutylacrylat und/oder 4-Hydroxybutylmethacrylat eingesetzt. Als weitere Monomerbausteine werden für die Polyacrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Die Kombination der Komponenten (A) und (B) sowie weitere Komponenten des Klarlacks
Der Gewichtsanteil der einzusetzenden hydroxylgruppenhaltigen Verbindungen (A), bezogen auf den Gewichtsanteil der isocyanatgruppenhaltigen Verbindungen (B), hängt vom Hydroxyäquivalentgewicht des Polyols und vom Äquivalentgewicht der Verbindung (B), also im Falle der bevorzugt als Komponente (B) eingesetzten Polyisocyanate vom Äquivalentgewicht der freien Isocyanatgruppen das Polyisocyanates (B), ab.

Die erfindungsgemäßen Klarlacke enthalten bevorzugt zwischen 30 bis 70 Gew.-%, bevorzugt 40 bis 60 Ges.-% und besonders bevorzugt 45 bis 55 Gew.-%, jeweils bezogen auf die nicht flüchtigen Bestandteile des Klarlacks, mindestens einer hydroxylgruppenhaltigen Verbindung (A) und/oder bevorzugt zwischen 20 bis 50 Gew.-%, bevorzugt 25 bis 45 Gew.-% und besonders bevorzugt 30 bis 40 Ges.-%, jeweils bezogen auf die nicht flüchtigen Bestandteile des Klarlacks, mindestens eines Vernetzungsmittels (B).

Die Gewichtsanteile des Polyols (A) und des Vernetzungsmittels (B), bevorzugt des Polyisocyanates (B), werden vorzugsweise solchermaßen gewählt, dass das molare Äquivalentverhältnis der reaktiven Gruppen der Komponente (B) (also im Falle der Polyisocyanate der Isocyanatgruppen der Verbindungen (B)) zu den Hydroxylgruppen der hydroxylgruppenhaltigen Verbindungen (A) zwischen 0,7:1 und 1:1,3, bevorzugt zwischen 0,8:1 und 1,2:1, besonders bevorzugt zwischen 0,9:1 und 1,1:1, liegt.

Handelt es sich um einkomponentige Klarlacke, so werden die isocyanatgruppenhaltigen Verbindungen (B) gewählt, deren freie Isocyanatgruppen mit den üblichen Blockierungsmitteln blockiert sind. Beispielsweise können die freien Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Ganz besonders bevorzugt werden die Isocyanatgruppen der Komponente (B) mit 3,5-Dimethylpyrazol, blockiert.

Das Mattierungsmittel (M) wird dabei üblicherweise dadurch in den Klarlacken eingearbeitet, dass es zunächst mit einem Teil des Bindemittels (A) mittels eines üblichen Mischers dispergiert wird. Auch das zusätzliche Rheologiehilfsmittel (R) wird dabei üblicherweise dadurch in den Klarlack eingearbeitet, dass es zunächst mit einem Teil des Bindemittels (A) mittels eines üblichen Mischers dispergiert wird. Danach die so erhaltene Mattierungsmittelpaste und die Paste des Rheologiehilfsmittels (R) mit dem restlichen Bindemittel und ggf. weiteren der nachfolgend beschriebenen Komponenten so lange verrührt wird.

bis eine homogene Mischung entsteht. Bei den erfindungsgemäß bevorzugten 2-komponentigen (2K) Klarlacken wird kurz vor der Applikation des Klarlacks die so erhaltene Bindemittelmischung, enthaltend die hydroxylgruppenhaltige Verbindung (A), das Mattierungsmittel (M), das zusätzliche Rheologiehilfsmittel (R) sowie weitere nachfolgend beschriebene Komponenten, mit einer weiteren Lackkomponente, enthaltend das oder die Vernetzungsmittel (B), und gegebenenfalls weitere der nachfolgend beschriebenen Komponenten in an sich bekannter Weise vermischt.

Als Lösemittel für die erfindungsgemäßen Klarlacke sind insbesondere solche geeignet, die im Klarlack chemisch inert gegenüber den Verbindungen (A) und (B) sind und die auch bei der Härtung des Klarlacks nicht mit (A) und (B) reagieren. Beispiele für solche Lösemittel sind aprotische Lösemittel, wie beispielsweise aliphatische und/oder aromatische Kohlenwasserstoffe wie Toluol, Xylol, Solventnaphtha®, Solvesso 100 oder Hydrosol® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln.

Neben den Verbindungen (A), (B), (M) und (R) können als Komponente (E) noch weitere Bindemittel und/oder Vernetzer eingesetzt werden, welche vorzugsweise mit den Hydroxylgruppen der Verbindung (A) und/oder mit den reaktiven Gruppen der Verbindung (B) reagieren und Netzwerkpunkte ausbilden können.

Als Komponente (E) sind insbesondere weitere Bindemittel, wie beispielsweise carbamatgruppenhaltige Verbindungen, geeignet.
In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Klarlacks, eingesetzt.

Darüber hinaus kann der erfindungsgemäße Klarlack mindestens ein übliches und bekanntes Lackadditiv in wirksamen Mengen, d.h. in Mengen vorzugsweise bis zu 15 Gew.-% und besonders bevorzugt 0,5 bis 10 Gew.-%, jeweils bezogen auf die nichtflüchtigen Bestandteile des Klarlacks, enthalten.

Beispiele geeigneter Lackadditive sind:
- Katalysatoren, wie beispielsweise Amine oder Lewis-Säuren (Elektronenmangelverbindungen), wie Zinnnaphtenat, Zinnbenzoat, Zinnnoctoat, Zinnbutyrat, Dibutylzinndilaurat, Dibutylzinndiacetat, Dibutylzinnoxid, Bleioctoat, sowie Katalysatoren, wie in WO-A-2006/042585 beschrieben
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- und /oder Flammschutzmittel.

In einer weiteren Ausführungsform der Erfindung kann der erfindungsgemäße Klarlack noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Klarlacken hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung - ggf. nach Zusatz entsprechender Katalysatoren - ausgezeichnet für die Autoreparaturlackierung oder die Kunststofflackierung.

Die Applikation der erfindungsgemäßen Klarlacke kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationssinrichtung oder -anlage bewegt wird. Indes kann auch das zu beschichtende Substrat, insbesondere ein Coli, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Klarlacke kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung und den für die Lackierung von Anbautellen angewandten Temperaturen, die bevorzugt zwischen 30 und 90°C liegen, auch längere Härtzeiten zur Anwendung kommen können.

Die Klarlacke führen - in der Regel nach Zusatz eines geeigneten Katalysators - auch bei Härtung bei niedrigen Temperaturen von maximal 90°C, wie sie im Bereich der Beschichtung von Kunststoffteilen, beispielsweise für Automobil-Anbauteile, oder im Bereich der Autoreparaturlackierung üblich sind, zu Beschichtungen mit einer sehr guten optischen Qualität. Gleichzeitig zeigen die erfindungsgemäßen Klarlacke eine gute Ringleitungsstabilität, d.h. keine Erhöhung des Glanzgrades der gehärteten Beschichtung durch die in der Ringleitung auftretende Scherbelastung um mehr als 10 Glanzeinheiten, so dass sich die erfindungsgemäßen Klarlacke auch sehr gut für die Automobilerst- bzw. die Automobliserien-lackierung eignen.

Außerdem weisen die Beschichtungsmittel eine gute Sedimentationsstabilität auf, d.h. dass auch nach längerer Lagerung von 3 Monaten der Klarlacke bei Umgebungstemperatur keine Bildung eines Bodensatzes auftritt, der sich Innerhalb von maximal 1 h mit einem üblichen Labormischer (insbesondere Vollrath 370W, Typ" EWTHV 0,5" der Firma Paul Vollrath GmbH & CO. KG, Hürth, Drehzahl 800 Umdrehungen pro Minute, Lenartscheibe d = 90 mm) mit einer Drehzahl von 800 Umdrehungen pro Minute nur noch schwer oder gar nicht mehr aufrühren lässt.

Gerade im Bereich der Automobillackierung ist es von besonderem Vorteil, dass die erfindungsgemäßen Klarlacke mit einem sogenannten erweiterten Prozessfenster verarbeitbar sind. Dies bedeutet, dass Glanzgradschwankungen oder fleckige Oberflächen in Abhängigkeit von den Applikationsbedingungen des OEM-Mehrschichtaufbaus vermieden werden. Insbesondere Ist der Glanzgrad der resultierenden Beschichtung bei pneumatischer Applikation und ESTA Applikation in etwa gleich. Ferner haben die Trocknungsbedingungen des Basislackes ebenso wie die Ablüftzeit der Klarlackschicht - falls überhaupt - einen nur geringen Einfluss auf den Glanzgrad der Mehrschichtlackierung.

Die erfindungsgemäßen Klarlacke liefern außerdem neue gehärtete Beschichtungen, erfindungsgemäß Klarlackierungen, Formteile, speziell optische Formteile, und freitragende Folien mit einer matten Oberfläche.

Die erfindungsgemäßen Klarlacke eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Klarlacke und Klarlackierungen in dem technologisch und ästhetisch besonders anspruchsvollen Gebiet der Automobilserienlackierung

(OEM) sowie der Automobilreparaturlackierung eingesetzt. Besonders bevorzugt werden die erfindungsgemäßen Klarlacke in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Klarlacken aufgetragen werden.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird der erfindungsgemäße Klarlack aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung und für die Lackierung von Anbauteilen angewandten Temperaturen, die bevorzugt zwischen 30 und 90°C liegen, auch längere Härtzeiten zur Anwendung kommen können.

### Beispiele

### Der Härter (B1)

Als Härter wird eine Mischung aus 89,6 Teilen einer 90%igen Lösung eines handelsüblichen trimerislerten Hexamethylendiisocyanat (HDI) in Solventnaphtha®/Butylacetat (Handelsprodukt Basonat® HI190 der BASF SE), 5,2 Teilen Butylacetat und 5,2 Teilen Solventnaphtha® eingesetzt.

### Polymethacrylatpolyol (A1)

Als Bindemittel in den 2K Klarlacken wird ein Polymethacrylatpolyol auf Basis 2-Hydroxypropylmethacrylat, Cyclohexylmethacrylat, 2-Ethylhexylmethacrylat, 2-Ethylhexylacrylat, und Acrylsäure mit einer OH-Zahl (berechnet) von 180 mgKOH/g, einer Säurezahl (berechnet) von 7 mgKOH/g und einem Festkörpergehalt (1 h 150°C) von 65% eingesetzt.

### Polyol (A2)

Als Bindemittel in den 1 K Klarlacken wird ein Polyol auf Basis Hydroxyethylacrylat, Styrol und n-Butylacrylat mit einer OH-Zahl (berechnet) von 131 mgKOH/g, einer Säurezahl (berechnet) von 2 mgKOH/g und einem Festkörpergehalt (1 h 150°C) von 60% eingesetzt.

### Herstellung einer Paste von hydrophoben Nanopartikeln auf Basis pyrogener Kieselsäure (R1)

In einer Labor-Rührwerksmühle der Firma Vollrath wurden 800 g Mahlgut, bestehend aus 323,2g g eines Polymethacrylatpolyols (A2) auf Basis Hydroxyethylacrylat, 4-Hydroxybutylacrylat, 2-Ethylhexylmethacrylat, n-Butylmethacrylat, Styrol und Acrylsäure mit einer OH-Zahl (berechnet) von 175 mgKOH/g, einer Säurezahl (berechnet) von 10 mgKOH/g und einem Festkörpergehalt (1 h 150°C) von 65%, 187,2 g Butanol, 200,8 g Xylol und 88,8 g Aerosil® R812S (Degussa AG, Hanau, Oberfläche nach BET = 220±25 m²/g, mittlere Primärteilchengröße 7 nm; hydrophob modifizierte pyrogene Kieselsäure), zusammen mit 1100 g Quarzsand (Korngröße 0.7 - 1 mm) eingewogen und unter Wasserkühlung 30 min angerieben. Anschließend wurde von den Mahlkörpern abgetrennt.

### Die Herstellung einer Paste von hydrophilen Nanopartikeln auf Basis pyrogener Kieselsäure (RV1)

In einer Labor-Rührwerksmühle der Firma Vollrath werden 1000 g Mahlgut, bestehend aus 750 g des Polymethacrylatpolyols (A3) auf Basis 2-Hydroxypropylmethacrylat, Hydroxyethylmethacrylat, Cyclohexylmethacrylat, n-Butylmethacrylat, Styrol und Acrylsäure mit einer OH-Zahl (berechnet) von 156 mgKOH/g, einer Säurezahl (berechnet) von 10 mgKOH/g und einem Festkörpergehalt (1 h 150°C) von 65%" 163 g Butylacetat und 87 g Aerosil® R 380 (Degussa AG, Hanau - Oberfläche nach BET = 380±30 m²/g, mittlere Primärteilchengröße 7 nm; hydrophil modifizierte pyrogene Kieselsäure), zusammen mit Quarzsand (Korngröße 0.7 - 1 mm) eingewogen und unter Wasserkühlung 30 min angerieben. Anschließend wurde von den Mahlkörpern abgetrennt.

### Herstellung der Beschichtungsmittel und der Mehrschichtlackierungen der Beispiele 1 bis 10 und der Vergleichsbeispiele V1 bis V13

Die Bindemittelmischungen des erfindungsgemäßen Beispiels 1 und die Bindemittelmischungen der Vergleichsbeispiele V1 bis V3 werden dadurch hergestellt, dass zunächst das Mattierungsmittel mit einem Teil des Bindemittels (A1) mittels eines üblichen Labormischers (Vollrath 370W, Typ " EWTHV 0,5" der Firma Paul Vollrath GmbH & CO. KG, Hürth, Drehzahl 1200 Umdrehungen pro Minute, Zahnscheibe d = 90 mm) mit einer Drehzahl von 1200 Umdrehungen pro Minute 30 Minuten dispergiert wird. Die so erhaltene Mattierungspaste des erfindungsgemäßen Beispiels 1 und die Mattierungspasten der Vergleichsbeispiele V1 bis V3 werden mit den in Tabelle 1 angegebenen Komponenten vereinigt und solange verrührt, bis eine homogene Mischung entsteht.

**Tabelle 1: Zusammensetzung der Bindemittelmischung des erfindungsgemäßen Beispiels 1 und der Vergleichsbeispiele V1 bis V3 in Gewichtsteilen**

| Beispiel | V1 | V2 | V3 | B1 |
|---|---|---|---|---|
| Polyol (A1) | 61 | 61 | 61 | 61 |
| Butyldiglykolacetat | 5,4 | 5,4 | 5,4 | 5,4 |
| Butylglykolacetat | 3,3 | 3,3 | 3,3 | 3,3 |
| Butylacetat | 5,1 | 5,1 | 5,1 | 5,1 |
| Solventnaphtha® | 2,5 | 2,5 | 2,5 | 2,5 |
| Ethoxypropylacetat | 4,0 | 4,0 | 4,0 | 4,0 |
| Butanol | 0,2 | 0,2 | 0,2 | 0,2 |
| Verlaufsmittel ¹⁾ | 0,15 | 0,15 | 0,15 | 0,15 |
| UV Absorber ²⁾ | 1,0 | 1,0 | 1,0 | 1,0 |
| HALS ³⁾ | 0,8 | 0,8 | 0,8 | 0,8 |
| Acematt® OK 412 (MV1)⁴⁾ | 8,5 | 6,5 | | |
| Syloid® ED 30 (M1)⁵⁾ | ---- | ---- | 11,0 | 10,0 |
| Butylacetat | 7,9 | 7,9 | 7,9 | 7,9 |
| hydrophobe Kieselsäure (R1)⁶⁾ | ---- | 2,0 | ---- | 2,0 |

Erläuterungen zu Tabelle 1:
1) Handelsübliches Verlaufsmittel der Firma Byk Chemie GmbH auf Basis eines modifizierten Polysiloxans, Menge bezogen auf reine Wirksubstanz, d.h. Menge ohne Lösemittel
2) Handelsübliches Lichtschutzmittel auf Basis eines UV Absorbers
3) Handelsübliches Lichtschutzmittel auf HALS (sterisch gehindertes Amin) Basis
4) Handelsübliches Mattierungsmittel Acematt® OK 412 der Firma Degussa AG auf Kieselsäure-Basis mit Wachs - Nachbehandlung, einer mittleren Teilchengröße von 3 µm (bestimmt durch Transmissionselektronenmikroskopie), einem d50-Wert (bestimmt durch Laserbeugung in Anlehnung an ISO 13320-1) von 6,0 µm und einer Ölzahl (in Anlehnung an DIN EN ISO 787-5) von 220 g/100g
5) Handelsübliches Mattierungsmittel Syloid® ED 30 der Firma W.R. Grace & Co. (=M1), Davison Chemical Division, auf Kieselgel-Basis mit Wachs-Nachbehandlung und einem Wachsgehalt 10 % Gew.-% (berechnet aus dem Kohlenstoffgehalt des Mattierungsmittels), einer gemessenen mittleren Teilchengröße (d50-Wert) von 5,6 µm (Die mittlere Teilchengröße wird dabei entsprechend der Norm für Laserbeugungsmessungen ISO 13320-1 jeweils bestimmt an einer Dispersion der Teilchen in Butylacetat (Brechungsindex: 1,462) durch Laser-Lichtstreuung bei Raumtemperatur (23°C) mit einem Malvern Mastersizer 2000 der Firma Malvern Instruments mit der Mini-Dispergiereinheit MS1 mit 2000 Umdrehungen pro Minute und Auswertung nach Fraunhofer.), einem Porenvolumen (H₂O) von 1,8 ml/g (bestimmt nach der Testmethode GRACE Q 53) und einer Ölzahl (in Anlehnung an DIN EN ISO 787-5) von 300 g/100g
6) Oben beschriebene Paste von hydrophoben Nanopartikeln auf Basis pyrogener Kieselsäure (R1)

Von den Bindemittelmischungen wird die Sedimentationsstabilität dadurch bestimmt, dass die Bindemittelmischungen bei Raumtemperatur gelagert werden und nach 1 Woche, nach 7 Wochen und nach 9 Wochen die Bindemittelmischungen visuell nach dem Auftreten von Bodensatz beurteilt werden. Falls Bodensatz auftritt, sollte dieser Bodensatz innerhalb von maximal 1 h mittels eines üblichen Labormischers (insbesondere Vollrath 370W, Typ " EWTHV 0,5" der Firma Paul Vollrath GmbH & CO. KG, Hürth, Drehzahl 800 Umdrehungen pro Minute, Lenartscheibe d = 90 mm) mit einer Drehzahl von 800 Umdrehungen pro Minute wieder vollständig aufrührbar sein. Die Ergebnisse sind in Tabelle 2 angegeben.

Zusätzlich wurden analog noch Bindemittelmischungen mit verschiedenen anderen Mattierungsmitteln anstelle des erfindungsgemäßen Mattierungsmittels (M1) hergestellt und von diesen Bindemittelmischungen ebenfalls die Sedimentationsstabilität untersucht. Die Ergebnisse sind ebenfalls in Tabelle 2 angegeben.

**Tabelle 2: Sedimentationsstabilität der Bindemittelmischungen der erfindungsgemäßen Beispiele 1 bis 5 und der Vergleichsbeispiele V1 und V4 bis V7**

| Beispiel | Matt.mittel | Aufrührbarkeit 1 Woche | Aufrührbarkeit 7 Wochen | Aufrührbarkeit 9 Wochen |
|---|---|---|---|---|
| 1 | Syloid® ED 30¹⁾ | i. O. | i. O. | i. O. |
| 2 | Syloid® ED 162 C²⁾ | i. O. | i. O. | i. O. |
| 3 | Syloid® C 907³⁾ | i. O. | i. O. | i. O. |
| 4 | Syloid® ED 40⁴⁾ | i. O. | i. O. | i. O. |
| 5 | Syloid® ED 80⁵⁾ | i. O. | i. O. | i. O. |
| V1 | Acematt® OK 412⁶⁾ | i. O. | Bodensatz, noch aufrührbar | Bodensatz, noch aufrührbar |
| V4 | Syloid® C 807⁷⁾ | Bodensatz, nicht aufrührbar | Bodensatz, nicht aufrührbar | ---- |
| V5 | Acematt® TS 100⁸⁾ | Bodensatz, noch aufrührbar | Bodensatz, nicht aufrührbar | ---- |
| V6 | Pergopak® M3⁹⁾ | Bodensatz, gerade noch aufrührbar | Bodensatz, nicht aufrührbar | ---- |
| V7 | Syloid® 621¹⁰⁾ | Bodensatz, nicht aufrührbar | Bodensatz, nicht aufrührbar | ---- |

Erläuterungen zu Tabelle 2:
1) Bei Tabelle 1 beschriebenes handelsübliches Mattierungsmittel Syloid® ED 30 der Firma W.R. Grace & Co. (=M1), Davison Chemical Division, auf Kieselgel-Basis mit Wachs-Nachbehandlung und einem Wachsgehalt 10 % Gew.-%, einer gemessenen mittleren Teilchengröße (d50-Wert) von 5,6 µm, einem Porenvolumen (H₂O) von 1,8 ml/g und einer Ölzahl von 300 g/100g
2) Handelsübliches Mattierungsmittel Syloid® 162 C der Firma W.R. Grace & Co., Davison Chemical Division, auf Kieselgel-Basis mit organischer Nachbehandlung, einer gemessenen mittleren Teilchengröße (d50-Wert) von 7 µm (Analog zur Teilchengröße von Syloid® ED30 bestimmt an einer Dispersion der Teilchen in Butylacetat (Brechungsindex: 1,462) durch Laser-Lichtstreuung bei Raumtemperatur (23°C) mit einem Malvern Mastersizer 2000 der Firma Malvern Instruments mit der Mini-Dispergiereinheit MS1 mit 2000 Umdrehungen pro Minute und Auswertung nach Fraunhofer.), einem Porenvolumen (H₂O) von 1,2 ml/g (bestimmt nach der Testmethode GRACE Q 53)
3) Handelsübliches Mattierungsmittel Syloid® C 907der Firma W.R. Grace & Co., Davison Chemical Division, auf Kieselgel-Basis mit organischer Nachbehandlung für UV härtbare Systeme, einer mittleren Teilchengröße von 7 µm (bestimmt durch Laserbeugung mit Malvern Mastersizer 2000, Fraunhofer Auswertung) und einem Porenvolumen (H₂O) von 2,0 ml/g (bestimmt nach der Testmethode GRACE Q 53)
4) Handelsübliches Mattierungsmittel Syloid® ED 40 der Firma W.R. Grace & Co. (=M1), Davison Chemical Division, auf Kieselgel-Basis mit Wachs-Nachbehandlung, einer mittleren Teilchengröße von 7 µm (bestimmt durch Laserbeugung mit Malvern Mastersizer 2000, Fraunhofer Auswertung) und einem Porenvolumen (H₂O) von 1,8 ml/g (bestimmt nach der Testmethode GRACE Q 53)
5) Handelsübliches Mattierungsmittel Syloid® ED 80 der Firma W.R. Grace & Co. (=M1), Davison Chemical Division, auf Kieselgel-Basis mit Wachs-Nachbehandlung, einer mittleren Teilchengröße von 11 µm (Analog zur Teilchengröße von Syloid® ED30 bestimmt an einer Dispersion der Teilchen in Butylacetat (Brechungsindex: 1,462) durch Laser-Lichtstreuung bei Raumtemperatur (23°C) mit einem Malvern Mastersizer 2000 der Firma Malvern Instruments mit der Mini-Dispergiereinheit MS1 mit 2000 Umdrehungen pro Minute und Auswertung nach Fraunhofer.) und einem Porenvolumen (H₂O) von 1,8 ml/g (bestimmt nach der Testmethode GRACE Q 53) Tabelle 3:
6) Handelsübliches Mattierungsmittel Acematt® OK 412 der Firma Degussa AG auf Kieselsäure-Basis mit Wachs - Nachbehandlung, einer mittleren Teilchengröße von 3 µm (bestimmt durch Transmissionselektronenmikroskopie), einem d50-Wert (bestimmt durch Laserbeugung in Anlehnung an ISO 13320-1) von 6,0 µm und einer Ölzahl (in Anlehnung an DIN EN ISO 787-5) von 220 g/100g
7) Handelsübliches Mattierungsmittel Syloid® C 807 der Firma W.R. Grace & Co., Davison Chemical Division, auf Kieselgel-Basis ohne Nachbehandlung, einer mittleren Teilchengröße von 7 µm (bestimmt durch Laserbeugung mit Malvern Mastersizer 2000, Fraunhofer Auswertung) und einem Porenvolumen (H₂O) von 2,0 ml/g (bestimmt nach der Testmethode GRACE Q 53)
8) Handelsübliches Mattierungsmittel Acematt® TS 100 der Firma Degussa AG auf Basis pyrogener Kieselsäure ohne organische Nachbehandlung, einer mittleren Teilchengröße von 9 µm (Analog zur Teilchengröße von Syloid® ED30 bestimmt an einer Dispersion der Teilchen in Butylacetat (Brechungsindex: 1,462) durch Laser-Lichtstreuung bei Raumtemperatur (23°C) mit einem Malvern Mastersizer 2000 der Firma Malvern Instruments mit der Mini-Dispergiereinheit MS1 mit 2000 Umdrehungen pro Minute und Auswertung nach Fraunhofer.)
9) Handelsübliches Mattierungsmittel Pergopak® M3 der Firma auf Basis eines Harnstoff Formaldehyd Kondensates mit einer mittleren Teilchengröße (Laserbeugung) von 6 bis 8,5 µm und einer Ölzahl (in Anlehnung an DIN EN ISO 787-5) von 310 g/100g
10) Handelsübliches Mattierungsmittel Syloid® 621 der Firma W.R. Grace & Co., Davison Chemical Division, auf Kieselgel-Basis ohne Nachbehandlung, einer mittleren Teilchengröße von 10 µm (bestimmt durch Laserbeugung mit Malvern Mastersizer 2000, Fraunhofer Auswertung) und einem Porenvolumen (H₂O) von 1,2 ml/g (bestimmt nach der Testmethode GRACE Q 53)

Die Ergebnisse der Beispiele 1 bis 5 in Tabelle 2 verdeutlichen, dass nur die erfindungsgemäß eingesetzten Mattierungsmittel auf Basis Kieselgel mit Wachs-Nachbehandlung die geforderte gute Sedimentationsstabilität aufweisen. Allenfalls der Einsatz des handelsüblichen Mattierungsmittel Acematt® OK 412 der Firma Degussa AG auf Kieselsäure-Basis mit Wachs-Nachbehandlung im Vergleichsbeispiel V1 führt noch zu Beschichtungsmitteln mit einer mäßigen Sedimentationsstabilität, die aber oftmals nicht ausreicht. Die Verwendung dieses Mattierungsmittels Acematt® OK 412 im Vergleichsbeispiel V1 führt allerdings zu Beschichtungsmitteln mit einer unzureichenden Ringleitungsstabilität, wie dies der nachfolgenden Tabelle 3 zu entnehmen ist.

Aufgrund der völlig unzureichenden Sedimentationsstabilität der Bindemittelmischungen der Vergleichsbeispiele V4 bis V8 und somit der fehlenden Eignung als Klarlack für die Automobilserienlackierung wurden mit diesen Vergleichsbeispielen V4 bis V8 keine weiteren Untersuchungen durchgeführt.

Die Klarlacke der erfindungsgemäßen Beispiele 1 bis 5 und die Klarlacke der Vergleichsbeispiele V1 bis V3 werden dadurch hergestellt, dass zu jeweils 100 Teilen der Bindemittelmischungen des erfindungsgemäßen Beispiels 1 bzw. der erfindungsgemäßen Beispiele 2 bis 5 und der Bindemittelmischungen der Vergleichsbeispiele V1 bis V3 jeweils 33 Teile der Härtermischung zugegeben und solange verrührt werden, bis eine homogene Mischung entsteht.

Beispielhaft sind im Folgenden die weiteren Prüfergebnisse des Klarlacks des Beispiels B1 im Vergleich mit den Klarlacken der Vergleichsbeispiele V1 und V3 angeführt. Die Prüfung der Ringleitungsstabilität der Klarlacke des Beispiels 1 und der Vergleichsbeispiele V1 und V3 erfolgte dadurch, dass die Klarlacke in einer Ringleitung umgepumpt und dabei einer Scherbelastung ausgesetzt werden, wobei folgende Bedingungen gegeben sind:
Druck am Rücklaufkontrollventil: 10 bar
Doppelhübe pro Minute: 18
Volumen (Doppelhub): 0,6 I
Vor der Scherbelastung in der Ringleitung (TO = 0) und nach jeweils 500, 1250, 1500 und 2000 Durchläufen (Turn Over = TO) in der Ringleitung wird der Glanzgrad bei 60° der Beschichtungen des Beispiels 1 und der Vergleichsbeispiele V1 und V3 gemessen. Eine ausreichende Ringleitungsstabilität der Beschichtungsmittel ist dann gegeben, wenn der Glanzgrad in einem Winkel von 60° um maximal 10 Glanzeinheiten nach Scherung durch Umpumpen in einer Ringleitung erhöht wird. Die Messung des Glanzes erfolgte jeweils bei 60° mit einem handelsüblichen Glanzgerät Byk Gardner, micro-TRI-gloss, Kat. Nr. 4520 der Firma Byk Gardner. Die Ergebnisse sind in Tabelle 3 dargestellt.

**Tabelle 3: Ringleitungsstabilität der Klarlacke des Beispiels 1 und der Vergleichsbeispiele V1 und V3**

| Anzahl TO in Ringleitung | Vgl. beisp. V1 | Vgl. beisp. V3 | Beispiel 1 |
|---|---|---|---|
| 0 | 19 | 16 | 25 |
| 500 | 27 | 16 | 29 |
| 1250 | 38 | 17 | 31 |
| 1500 | 42 | 16 | 32 |
| 2000 | 50 | 16 | 32 |

Der Vergleich der Ergebnisse des Beispiels 1 und des Vergleichsbeispiels V3 mit denen des Vergleichsbeispiels V1 in der Tabelle 3 zeigt, dass durch die Verwendung von Mattierungsmitteln auf Kieselgel-Basis eine im Vergleich zu Mattierungsmitteln auf Kieselsäure-Basis verbesserte Ringleitungsstabilität erreicht wird. Dabei macht es bezüglich der Ringleitungsstabilität keinen wesentlichen Unterschied, ob das Beschichtungsmittel zusätzlich noch das Rheologiehilfsmittel (R) auf Basis hydrophober Kieselsäure - wie im Beispiel 1 - enthält oder ob das Beschichtungsmittel nur Mattierungsmittel auf Kieselgel-Basis, aber kein Rheologiehilfsmittel (R) auf Basis hydrophober Kieselsäure - wie im Vergleichsbeispiel V3 - enthält. Allerdings weist das Beschichtungsmittel dieses Vergleichsbeispiels V3 ein unzureichendes sogenanntes Prozessfenster auf, wie den nachfolgenden Tabellen 4 bis 6 zu entnehmen ist.

Ein breites und damit gutes oder sehr gutes Prozessfenster bedeutet dabei, dass Glanzgradschwankungen oder fleckige Oberflächen in Abhängigkeit von der Applikationsart und anderen Applikationsbedingungen, wie z.B. Ablüft- und Einbrennbedingungen des OEM-Mehrschichtaufbaus, Ausflussraten der Beschichtungsmittel u.Ä., vermieden werden. Insbesondere ist bei einem guten Prozessfenster der Glanzgrad der resultierenden Beschichtung bei pneumatischer Applikation und ESTA Applikation in etwa gleich. Ferner haben die Trocknungsbedingungen des Basislackes ebenso wie die Ablüftzeit der Klarlackschicht - falls überhaupt - einen nur geringen Einfluss auf den Glanzgrad der Mehrschichtlackierung.

Die Beurteilung des sogenannten Prozessfensters der Beschichtung erfolgte nach Applikation der Klarlacke des Beispiels 1 und der Vergleichsbeispiele V1 und V3 auf einem handelsüblichen Wasserbasislack Alanitgrau der Firma BASF Coatings AG. Der Basislack wurde zuvor auf handelsübliche gebonderte Stahlbleche der Firma Chemetall, die mit einer handelsüblichen, eingebrannten Elektrotauchlackierung der Firma BASF Coatings AG und einem handelsüblichen, eingebrannten Primer der Firma BASF Coatings AG beschichtet wurden, appliziert. Danach wird die jeweils resultierende Beschichtung bei Raumtemperatur abgelüftet und anschließend bei 140°C 22 Minuten eingebrannt. Die Messung des Glanzes erfolgte jeweils bei 60° mit einem handelsüblichen Glanzgerät Byk Gardner, micro-TRI-gloss, Kat. Nr. 4520 der Firma Byk Gardner.
In Tabelle 4 ist die Abhängigkeit des Glanzgrades von der Vortrocknung des Basislackes für die Klarlacke des Beispiels 1 und der Vergleichsbeispiele V1 und V3 dargestellt.

**Tabelle 4: Abhängigkeit des Glanzgrades von der Vortrocknung des Basislackes**

| Ofentemperatur [°C] | Vgl.-beisp. V1 | Vgl.-beisp. V3 | Beisp. 1 |
|---|---|---|---|
| 55 | 17 | 23 | 16 |
| 65 | 18 | 39 | |
| 70 | 18 | | 18 |
| 80 | 22 | 42 | |
| 140 | 39 | | 25 |
| Prozessfenster | mäßig | schlecht | sehr gut |

Der Vergleich des erfindungsgemäßen Beispiels B1 mit den Vergleichsbeispielen V1 und V3 in Tabelle 4 zeigt, dass durch den Zusatz des Rheologiehilfsmittels auf Basis hydrophob modifizierter Kieselsäure (R1) der Glanzgrad der resultierenden Beschichtung des Beispiels B1 selbst bei extrem unterschiedlicher Vortrocknung des Basislackes einmal bei 55 °C und das andere Mal bei 140°C nur leicht unterschiedlich ist (also sehr gutes Prozessfenster), während ohne den Zusatz des Rheologiehilfsmittels auf Basis hydrophob modifizierter Kieselsäure der Glanzgrad der resultierenden Beschichtung sowohl des Vergleichsbeispiels V1 als auch des Vergleichsbeispiels V3 doch sehr stark von der Vortrocknung des Basislackes abhängt. Wenn das Beschichtungsmittel ein Mattierungsmittel auf Basis Kieselsäure, aber kein Rheologiehilfsmittel auf Basis hydrophob modifizierter Kieselsäure enthält (Vergleichsbeispiel V1), dann ist dabei allerdings die Abhängigkeit des Glanzgrades von der Vortrocknung des Basislackes nicht ganz so stark ausgeprägt wie bei Beschichtungsmitteln, die ein Mattierungsmittel auf Basis Kieselgel, aber kein Rheologiehilfsmittel auf Basis hydrophob modifizierter Kieselsäure (Vergleichsbeispiel V3) enthalten. Wie bereits bei Tabelle 3 ausgeführt, weisen diese Beschichtungsmittel mit Mattierungsmitteln auf Kieselsäure-Basis (Vergleichsbeispiel V1) aber insbesondere den Nachteil einer unzureichenden Ringleitungsstabilität auf.

In Tabelle 5 ist die Abhängigkeit des Glanzgrades von der Applikationsart des Klarlackes dargestellt. Im Bereich der Automobilserienlackierung erfolgt die Applikation des Klarlackes in der Linie standardmäßig mittels ESTA. Allerdings wird in manchen Werken zusätzlich die pneumatische Applikation per Hand verwendet, beispielsweise zur Auslackierung der Fälze oder der Lackierung von Magerstellen. Auch hier sollte wiederum der Glanzgrad bei beiden Applikationsarten für den jeweils gleichen Klarlack möglichst gleich sein.

**Tabelle 5: Abhängigkeit des Glanzgrades von der Applikationsart des Klarlackes**

| | ESTA | Hand-Applikation | Prozessfenster |
|---|---|---|---|
| Vgl.beisp. V1 | 18 | 27 | mäßig |
| Vgl.beisp. V3 | 22 | 53 | schlecht |
| Beisp. 1 | 18 | 20 | Sehr gut |

Der Vergleich des erfindungsgemäßen Beispiels B1 mit den Vergleichsbeispielen V1 und V3 zeigt, dass nur durch den Zusatz des Rheologiehilfsmittels auf Basis hydrophob modifizierter Kieselsäure bei gleichzeitiger Verwendung des erfindungsgemäßen Mattierungsmittels auf Basis oberflächenmodifiziertem Kieselgel der Glanzgrad der resultierenden Beschichtung praktisch nicht von der Applikationsart abhängt, also ein sehr gutes Prozessfenster gewährleistet ist.

In Tabelle 6 ist die Abhängigkeit des Glanzgrades von der Ablüftzeit des Klarlackes für das Beispiel 1 und die Vergleichsbeispiele V1 und V3 dargestellt.

**Tabelle 6: Abhängigkeit des Glanzgrades von der Ablüftzeit des Klarlackes für das Beispiel 1 und die Vergleichsbeispiele V1 und V3**

| Ablüftzeit Klarlack [min] | Vgl.beisp. V1 | Vgl.beisp. V3 | Beispiel 1 |
|---|---|---|---|
| 5 | 18 | 39 | 17 |
| 10 | 19 | 29 | 17 |
| 20 | 20 | 20 | |
| 30 | 26 | | 18 |
| | | | |
| Prozessfenster | mäßig | schlecht | sehr gut |

Der Vergleich des erfindungsgemäßen Beispiels B1 mit dem Vergleichsbeispiel V3 zeigt wiederum, dass durch den Zusatz des Rheologiehilfsmittels auf Basis hydrophob modifizierter Kieselsäure der Glanzgrad der resultierenden Beschichtung nicht von der Ablüftzeit des Klarlackes abhängt, während ohne diesen Zusatz - wie im Vergleichsbeispiel V3 - eine deutliche Abhängigkeit des Glanzgrades von der Ablüftzeit des Klarlackes zu beobachten ist.

Außerdem wurde noch der Einsatz weiterer, verschiedener Rheologiehilfsmittel in den mattierten Klarlacken untersucht. Analog zu dem Klarlack des Beispiels B1 wurde hierzu der Klarlack auf Basis von Syloid® ED 30 aus dem Vergleichsbeispiel 3 mit verschiedenen Rheologiehilfsmitteln versetzt. Die Zusammensetzung der entsprechenden Bindemittelmischungen ist in Tabelle 7 dargestellt. Die Klarlacke der erfindungsgemäßen Beispiele B6 bis B9 und die Klarlacke der Vergleichsbeispiele V8 bis V11 werden dadurch hergestellt, dass zu jeweils 100 Teilen der Bindemittelmischungen der erfindungsgemäßen Beispiele B6 bis B9 und der Bindemittelmischungen der Vergleichsbeispiele V8 bis V11 jeweils 33 Teile der Härtermischung zugegeben und solange verrührt werden, bis eine homogene Mischung entsteht.

**Tabelle 7: Zusammensetzung der Bindemittelmischungen der erfindungsgemäßen Beispiele B6 bis B9 und der Vergleichsbeispiele V8 bis V11 in Gewichtsteilen**

| Beispiel | B6 | B7 | B8 | B9 | V8 | V9 | V10 | V11 |
|---|---|---|---|---|---|---|---|---|
| Polyol (A1) | 59,9 | 59,9 | 59,9 | 59,9 | 59,9 | 59,9 | 59,9 | 59,9 |
| Butyldiglykolacetat | 5,3 | 5,3 | 5,3 | 5,3 | 5,3 | 5,3 | 5,3 | 5,3 |
| Butylglykolacetat | 3,3 | 3,3 | 3,3 | 3,3 | 3,3 | 3,3 | 3,3 | 3,3 |
| Butylacetat | 5,1 | 5,1 | 5,1 | 5,1 | 5,1 | 5,1 | 5,1 | 5,1 |
| Solventnaphtha® | 2,5 | 2,5 | 2,5 | 2,5 | 2,5 | 2,5 | 2,5 | 2,5 |
| Ethoxypropylacetat | 3,75 | 3,75 | 3,75 | 3,75 | 3,75 | 3,75 | 3,75 | 3,75 |
| Butanol | 0,2 | 0,2 | 0,2 | 0,2 | 0,2 | 0,2 | 0,2 | 0,2 |
| Verlaufsmittel ¹⁾ | 0,15 | 0,15 | 0,15 | 0,15 | 0,15 | 0,15 | 0,15 | 0,15 |
| UV Absorber ²⁾ | 1,0 | 1,0 | 1,0 | 1,0 | 1,0 | 1,0 | 1,0 | 1,0 |
| HALS ³⁾ | 0,8 | 0,8 | 0,8 | 0,8 | 0,8 | 0,8 | 0,8 | 0,8 |
| Syloid® ED 30 (M1)⁴⁾ | 10,0 | 10,0 | 10,0 | 10,0 | 10,0 | 10,0 | 10,0 | 10,0 |
| Butylacetat | 9,0 | 9,0 | 9,0 | 9,0 | 9,0 | 7,0 | 7,0 | 7,0 |
| hydrophobe Kieselsäure (R1)⁵⁾ | 1,0 | 2,0 | 4,0 | 2,0 | | | | |
| hydrophile Kieselsäure (RV1)⁶⁾ | | | | 2,0 | 2,0 | | | |
| Wachs- Paste (RV2)⁷⁾ | | | | | | 6,0 | | |
| modif. Harnstoff (RV3)⁸⁾ | | | | | | | 10,0 | |
| Polycarbonsäuresalz von Polyaminamiden (RV4)⁹⁾ | | | | | | | | 0,2 |
| Summe Gewichtsteile | 102 | 103 | 105 | 105 | 103 | 105 | 109 | 99,2 |

Erläuterungen zu Tabelle 7:
1) Handelsübliches Verlaufsmittel der Firma Byk Chemie GmbH auf Basis eines modifizierten Polysiloxans, Menge bezogen auf reine Wirksubstanz, d.h. Menge ohne Lösemittel
2) Handelsübliches Lichtschutzmittel auf Basis eines UV Absorbers
3) Handelsübliches Lichtschutzmittel auf HALS (sterisch gehindertes Amin) Basis
4) Bei Tabelle 1 beschriebenes handelsübliches Mattierungsmittel Syloid® ED 30 der Firma W.R. Grace & Co. (=M1), Davison Chemical Division, auf Kieselgel-Basis mit Wachs-Nachbehandlung und einem Wachsgehalt 10 % Gew.-%, einer gemessenen mittleren Teilchengröße (d50-Wert) von 5,6 µm, einem Porenvolumen (H₂O) von 1,8 ml/g und einer Ölzahl von 300 g/100g
5) oben beschriebene Paste von hydrophoben Nanopartikeln auf Basis pyrogener Kieselsäure (R1)
6) oben beschriebene Paste von hydrophilen Nanopartikeln auf Basis pyrogener Kieselsäure (RV1)
7) (RV2) = Paste des handelsüblichen Polyamidwachses Disparlon® 6900-20X der Firma C.H. Erbslöh KG, vermahlen in dem oben beschriebenen Bindemittel (A1), Wachsgehalt 3 Gew.-%, bezogen auf das Gesamtgewicht der Paste
8) handelsübliches Rheologiehilfsmittel (RV3) Setal ® 8146 SS55 der Firma Nuplex auf Basis einer 55 %igen Lösung eines modifizierten Harnstoffes,
9) handelsübliches Netz- und Dispergiermittel (RV4) Antiterra 204 der Firma Byk Chemie GmbH auf Basis einer Lösung eines Polycarbonsäuresalzes von Polyaminamiden, 52%ig in Methoxypropanol/Alkylbenzolen 3/2

Die resultierenden Klarlacke wurden analog zur Beschichtung des Beispiels B1 auf einem handelsüblichen Wasserbasislack Alanitgrau der Firma BASF Coatings AG, der zuvor 5min bei 70°C abgelüftet wurde, appliziert. Der Basislack wurde zuvor auf handelsübliche gebonderte Stahlbleche der Firma Chemetall, die mit einer handelsüblichen, eingebrannten Elektrotauchlackierung der Firma BASF Coatings AG und einem handelsüblichen, eingebrannten Primer der Firma BASF Coatings AG beschichtet wurden, appliziert. Danach wird die jeweils resultierende Basislack-Klarlack-Beschichtung bei Raumtemperatur abgelüftet und anschließend bei 140°C 22 Minuten eingebrannt.

Die Messung des Glanzes erfolgte jeweils bei 60° mit einem handelsüblichen Glanzgerät Byk Gardner, micro-TRI-gloss, Kat. Nr. 4520 der Firma Byk Gardner. Die Applikation des Klarlackes erfolgte dabei zunächst nur per Hand-Applikation, da diese Applikation kritischer hinsichtlich des Glanzgrades ist. Falls die so erhaltene gehärtete Beschichtung einen Glanzgrad von unter 30 Einheiten aufwies, erfolgte zusätzlich noch die ESTA-Applikation. Die Ergebnisse sind in Tabelle 8 dargestellt.

**Tabelle 8: Glanzgrad der Beschichtungen der Beispiele B6 bis B9 und der Vergleichsbeispiele V8 bis V11 in Abhängigkeit vom zugesetzten Verlaufsmittel**

| | Art und Menge des Verlaufsmittels (R) | ESTA Glanz | Hand Glanz |
|---|---|---|---|
| Beisp. 6 | 1% Paste der hydrophoben Kiesels. (R1)¹⁾ | 19 | 22 |
| Beisp. 7 | 2% Paste der hydrophoben Kiesels. (R1)¹⁾ | 20 | 22 |
| Beisp. 8 | 4% Paste der hydrophoben Kiesels. (R1)¹⁾ | 22 | 25 |
| Beisp. 9 | 2% Paste der hydrophoben Kiesels. (R1)¹⁾ + 2% Paste der hydrophilen Kiesels. (RV1)²⁾ | 21 | 22 |
| Vgl.beisp. V8 | 2% Paste der hydrophilen Kiesels. (RV1)²⁾ | --- | 38 |
| Vgl.beisp. V9 | Wachs- Paste (RV2)³⁾ | --- | 55 |
| Vgl.beisp. V10 | modif. Harnstoff (RV3)⁴⁾ | --- | 44 |
| Vgl.beisp. V11 | Polycarbonsäuresalz von Polyaminamiden (RV4)⁵⁾ | --- | 57 |

Erläuterungen zu Tabelle 8:
1) Oben beschriebene Paste von hydrophoben Nanopartikeln auf Basis pyrogener Kieselsäure (R1)
2) Oben beschriebene Paste von hydrophilen Nanopartikeln auf Basis pyrogener Kieselsäure (RV1)
3) (RV2) = Paste des handelsüblichen Polyamidwachses Disparlon® 6900-20X der Firma C.H. Erbslöh KG, vermahlen in dem oben beschriebenen Bindemittel (A1), Wachsgehalt 3 Gew.-%, bezogen auf das Gesamtgewicht der Paste
4) handelsübliches Rheologiehilfsmittel (RV3) Setal ® 8146 SS55 der Firma Nuplex auf Basis einer 55 %igen Lösung eines modifizierten Harnstoffes,
5) handelsübliches Netz- und Dispergiermittel (RV4) Antiterra 204 der Firma Byk Chemie GmbH auf Basis einer Lösung eines Polycarbonsäuresalzes von Polyaminamiden, 52%ig in Methoxypropanol/Alkylbenzolen 3/2
Der Vergleich der Beispiele 6 bis 9 zeigt, dass durch den erfindungsgemäßen Einsatz des Rheologiehilfsmittels (R1) auf Basis hydrophober Kieselsäure in Kombination mit Mattierungsmitteln (M) auf Kieselgel-Basis Klarlacke mit einem sehr guten Prozessfenster (praktisch keine Glanzunterschiede bei ESTA- und bei Hand-Applikation) erhalten werden, dass eine Erhöhung der Einsatzmenge des Rheologiehilfsmittels (R) über 1 Gew.-% hinaus aber keine weitere Verbesserung des Prozessfensters, aber auch keine Verschlechterung des Prozessfensters zur Folge hat.

Außerdem zeigt der Vergleich des Beispiels 9 mit dem Beispiel 7, dass der Zusatz eines weiteren Rheologiehilfsmittels (RV1) auf Basis hydrophiler Kieselsäure zu keiner Verschlechterung des Prozessfensters führt. Demgegenüber zeigt der Vergleich der Beispiele 6 bis 9 mit dem Vergleichsbeispiel V8, dass der alleinige Zusatz eines Rheologiehilfsmittels (RV1) auf Basis hydrophiler Kieselsäure zu keiner Verbesserung des Prozessfensters führt.
Weiterhin zeigt der Vergleich der Beispiele 6 bis 9 mit den Vergleichsbeispielen V9 bzw. V10 bzw. V11, dass weder der Zusatz von Rheologiehilfsmitteln auf Wachs-Basis noch der Zusatz von Rheologiehilfsmitteln auf Basis von modifizierten Harnstoffen noch der Zusatz von Netz- und Dispergiermitteln auf Basis von Polycarbonsäuresalzes von Polyaminamiden positive Auswirkungen auf den Glanzgrad der Beschichtungen hat.

Schließlich wurden analog zu den 2K Klarlacken noch der mattierte 1 K Klarlack des erfindungsgemäßen Beispiels 10 und die mattierten 1 K Klarlacke der Vergleichsbeispiele V12 und V13 hergestellt. Hierzu wurde zunächst das Mattierungsmittel mit einem Teil des Bindemittels (A2) mittels eines üblichen Labormischers (Vollrath 370W, Typ " EWTHV 0,5" der Firma Paul Vollrath GmbH & CO. KG, Hürth, Drehzahl 1200 Umdrehungen pro Minute, Zahnscheibe d = 90 mm) mit einer Drehzahl von 1200 Umdrehungen pro Minute 30 Minuten dispergiert. Die so erhaltene Mattierungspaste des erfindungsgemäßen Beispiels 10 und die Mattierungspasten der Vergleichsbeispiele V12 bis V13 werden mit den in Tabelle 9 angegebenen Komponenten vereinigt und solange verrührt werden, bis eine homogene Mischung entsteht.

**Tabelle 9: Zusammensetzung der Klarlacke des Beispiels 10 und der Vergleichsbeispiele V12 und V13 in Gewichtsteilen**

| | Vergleichsbeispiel V12 | Vergleichsbeispiel V13 | Beispiel 10 |
|---|---|---|---|
| Polyol (A2)¹⁾ | 32,5 | 32,5 | 31,8 |
| Xylol | 0,9 | 0,9 | 0,9 |
| Luwipal 018 BX ²⁾ | 23,9 | 23,9 | 23,5 |
| Butanol | 3,5 | 3,5 | 3,5 |
| Polyol (A3) ³⁾ | 12,2 | 12,2 | 12,0 |
| Xylol | 2,8 | 2,8 | 2,8 |
| Lichtschutzmittel ⁴⁾ | 1,1 | 1,1 | 1,1 |
| Verlaufsmittel ⁵⁾ | 0,13 | 0,13 | 0,13 |
| Verlaufsmittel ⁶⁾ | 0,1 | 0,1 | 0,1 |
| Verlaufsmittel ⁷⁾ | 0,1 | 0,1 | 0,1 |
| Aminblockierte p-Toluolsulphonsäure ⁸⁾ | 0,7 | 0,7 | 0,6 |
| Butylglykolacetat | 2,6 | 2,6 | 2,6 |
| Solventnaphtha® | 1,8 | 1,8 | 1,7 |
| Butylglykolacetat | 1,8 | 1,8 | 1,7 |
| Xylol | 3,9 | 3,9 | 3,8 |
| Butylglykolacetat | 2,0 | 2,0 | 2,0 |
| Xylol | 6,1 | 6,1 | 5,8 |
| Acematt® OK 412 ⁹⁾ | 3,9 | | |
| Syloid® ED30 ¹⁰⁾ | | 3,9 | 3,9 |
| Hydrophobe Kieselsäure (R1) ¹¹⁾ | | | 2,0 |
| Summe | 100,0 | 100,0 | 100,0 |

Erläuterungen zu Tabelle 9:
1) Oben beschriebenes Polyol (A2)
2) handelsübliches, mit Butanol teilverethertes Melamin-Formaldehydharz der Firma BASF AG, 64 - 68%ig in n-Butanol/Xylol 2:1
3) Setalux 91756 der Firma Nuplex, handelsübliches hydroxylgruppenhaltiges Polyacrylat mit einer OH-Zahl von 104 mgKOH/g, einer Säurezahl von 15 mgKOH/g und einem Festkörpergehalt (1 h 150°C) von 65%, modifiziert mit einem Harnstoffderivat auf Basis Benzylamin/Hexamethylendiisocyanat
4) handelsübliche Mischung von Lichtschutzmittel auf Basis UV-Absorber und Lichtschutzmittel auf Basis HALS (sterisch gehindertes Amin) 6:4 der Firma Ciba Speciality Chemicals Inc.
5) handelsübliches Verlaufsmittel der Firma Lubrizol auf Basis eines Polyacrylates, Menge bezogen auf reine Wirksubstanz, d.h. Menge ohne Lösemittel
6) handelsübliches Verlaufsmittel der Firma Byk Chemie GmbH auf Basis eines modifizierten Polysiloxans, Menge bezogen auf reine Wirksubstanz, d.h. Menge ohne Lösemittel
7) handelsübliches Verlaufsmittel der Firma Byk Chemie GmbH auf Basis eines Polyacrylates, 30%ig in Methoxypropylacetat/Butylacetat 6 : 1
8) handelsüblicher Katalysator der Firma Ciba auf Basis aminblockierte p-Toluolsulphonsäure; 42%ig in Ethylglykol
9) handelsübliches Mattierungsmittel Acematt® OK 412 der Firma Degussa AG auf Kieselsäure-Basis mit Wachs - Nachbehandlung, einer mittleren Teilchengröße von 3 µm (bestimmt durch Transmissionselektronenmikroskopie), einem d50-Wert (bestimmt durch Laserbeugung in Anlehnung an ISO 13320-1) von 6,0 µm und einer Ölzahl (in Anlehnung an DIN EN ISO 787-5) von 220 g/100g
10) Bei Tabelle 1 beschriebenes handelsübliches Mattierungsmittel Syloid® ED 30 der Firma W.R. Grace & Co. (=M1), Davison Chemical Division, auf Kieselgel-Basis mit Wachs-Nachbehandlung und einem Wachsgehalt 10 % Gew.-%, einer gemessenen mittleren Teilchengröße (d50-Wert) von 5,6 µm, einem Porenvolumen (H₂O) von 1,8 ml/g und einer Ölzahl von 300 g/100g
11) Oben beschriebene Paste von hydrophoben Nanopartikeln auf Basis pyrogener Kieselsäure (R1)

Von den Klarlacken des Beispiels 10 und der Vergleichsbeispiele V12 und V13 wird die Sedimentationsstabilität dadurch bestimmt, dass die Klarlacke bei Raumtemperatur gelagert werden und nach 1 Woche visuell nach dem Auftreten von Bodensatz beurteilt werden. Falls Bodensatz auftritt, sollte dieser Bodensatz innerhalb von maximal 1 h mittels eines üblichen Labormischers (insbesondere Vollrath 370W, Typ " EWTHV 0,5" der Firma Paul Vollrath GmbH & CO. KG, Hürth, Drehzahl 800 Umdrehungen pro Minute, Lenartscheibe d = 90 mm) mit einer Drehzahl von 800 Umdrehungen pro Minute wieder vollständig aufrührbar sein. Die Ergebnisse sind in Tabelle 10 angegeben.

**Tabelle 10: Sedimentationsstabilität der Klarlacke des erfindungsgemäßen Beispiels 10 und der Vergleichsbeispiele V12 und V13**

| Beispiel | Mattierungsmittel | Aufrührbarkeit nach 1 Woche |
|---|---|---|
| V12 | Acematt® OK 412 | i.O. ¹⁾ |
| V13 | Syloid® ED30 | i.O. ¹⁾ |
| 10 | Syloid® ED30 + R1 | i.O. ¹⁾ |

Erläuterung zu Tabelle 10:
1) Die visuelle Beurteilung der Klarlacke des erfindungsgemäßen Beispiels 10 und der Vergleichsbeispiele V12 und V13 zeigte ein stärkeres Absetzen des Klarlacks auf Basis Acematt® OK 412 des Vergleichsbeispiels V12 als bei den Klarlacken auf Basis Syloid® ED30 des Vergleichsbeispiels V13 und des Beispiels 10.

Weiterhin wird von den Klarlacken des Beispiels 10 und der Vergleichsbeispiele V12 und V13 die Ringleitungsstabilität dadurch geprüft, dass die Klarlacke in einer Ringleitung umgepumpt und dabei einer Scherbelastung ausgesetzt werden, wobei folgende Bedingungen gegeben sind:
Druck am Rücklaufkontrollventil: 10 bar
Doppelhübe pro Minute: 18
Volumen (Doppelhub): 0,6 I
Vor der Scherbelastung in der Ringleitung (TO = 0) und nach jeweils 500, 1500 und 2000 Durchläufen (Turn Over = TO) in der Ringleitung wird der Glanzgrad bei 60° der Beschichtungen gemessen. Eine ausreichende Ringleitungsstabilität der Beschichtungsmittel ist dann gegeben, wenn der Glanzgrad in einem Winkel von 60° um maximal 10 Glanzeinheiten nach Scherung durch Umpumpen in einer Ringleitung erhöht wird. Die Messung des Glanzes erfolgte jeweils bei 60° mit einem handelsüblichen Glanzgerät Byk Gardner, micro-TRI-gloss, Kat. Nr. 4520 der Firma Byk Gardner. Die Ergebnisse sind in Tabelle 11 dargestellt.

**Tabelle 11: Ringleitungsstabilität der Klarlacke des Beispiels 10 und der Vergleichsbeispiele V12 und V13**

| Anzahl TO in Ringleitung | Vgl. beisp. V12 | Vgl. beisp. V13 | Beispiel 10 |
|---|---|---|---|
| 0 | 27 | 30 | 29 |
| 500 | 29 | 30 | 29 |
| 1500 | 35 | 32 | 31 |
| 2000 | 43 | 32 | 32 |

Auch im Falle der 1 K Klarlacke wird durch die Verwendung von Mattierungsmitteln auf Kieselgel-Basis wie im Beispiel 10 und im Vergleichsbeispiel V13 eine im Vergleich zu Klarlacken mit Kieselsäure-Mattierungsmitteln (Vergleichsbeispiel V12) verbesserte Ringleitungsstabilität erreicht.

Schließlich wird auch von den 1 K Klarlacken analog zur Prüfung der 2K Klarlacke das sogenannte Prozessfenster dadurch beurteilt, dass der Glanzgrad der resultierenden Beschichtungen in Abhängigkeit von der Vortrocknung des Basislackes untersucht wird. Die Ergebnisse sind in Tabelle 12 dargestellt.

**Tabelle 12: Abhängigkeit des Glanzgrades von der Vortrocknung des Basislackes**

| Ofentemperatur [°C] | Vgl.-beisp. V12 | Vgl.-beisp. V13 | Beispiel 10 |
|---|---|---|---|
| 55 | 28 | 30 | 28 |
| 70 | 28 | 39 | 30 |
| 80 | 33 | 45 | 31 |
| 140 | 47 | 49 | 36 |

Der Vergleich des erfindungsgemäßen Beispiels B10 mit den Vergleichsbeispielen V12 und V13 in Tabelle 12 zeigt, dass durch den Zusatz des Rheologiehilfsmittels auf Basis hydrophob modifizierter Kieselsäure (R1) der Glanzgrad der resultierenden Beschichtung des Beispiels 10 selbst bei extrem unterschiedlicher Vortrocknung des Basislackes einmal bei 55 °C und das andere Mal bei 140°C nur leicht unterschiedlich ist (also sehr gutes Prozessfenster), während ohne den Zusatz des Rheologiehilfsmittels auf Basis hydrophob modifizierter Kieselsäure der Glanzgrad der resultierenden Beschichtung sowohl des Vergleichsbeispiels V12 als auch des Vergleichsbeispiels V13 doch sehr stark von der Vortrocknung des Basislackes abhängt.

## Patentansprüche

1. Klarlack auf Basis organischer Lösemittel, enthaltend mindestens eine hydroxylgruppenhaltige Verbindung (A), mindestens ein Vernetzungsmittel (B) mit gegenüber Hydroxylgruppen reaktiven Gruppen und mindestens ein Mattierungsmittel (M) auf Kieselgel-Basis, **dadurch gekennzeichnet, dass**
(i) das Mattierungsmittel (M) auf Kieselgel-Basis mit einem oder mehreren Wachsen oberflächenmodifiziert ist,
und
(ii) der Klarlack zusätzlich mindestens ein Rheologiehilfsmittel (R) auf Basis hydrophober Kieselsäure, hergestellt durch die Oberflächenmodifizierung von pyrogenem Siliciumdioxid mit hydrophobe Gruppen enthaltenden Verbindungen, enthält.

2. Beschichtungsmittel nach Anspruch 1, **dadurch gekennzeichnet, dass** das Mattierungsmittel (M) auf Kieselgel-Basis mit einem oder mit mehreren verschiedenen, linearen unverzweigten Polyolefinwachsen, bevorzugt mit einem oder mit mehreren verschiedenen Polyethylenwachsen, modifiziert ist.

3. Beschichtungsmittel nach Anspruch 1 oder 2, **dadurch gekennzeichnet, dass** der Wachsgehalt des Mattierungsmittels (M) auf Kieselgel-Basis zwischen 3 und 20 Gew.-%, bevorzugt zwischen 5 und 15 Gew.-%. jeweils bezogen auf das Gesamtgewicht des Mattierungsmittels, beträgt.

4. Beschichtungsmittel nach einem der Ansprüche 1 bis 3, **dadurch gekennzeichnet, dass** das Mattierungsmittel (M) auf Kieselgel-Basis eine mittlere Teilchengröße von 4 bis 14 µm, bevorzugt von 5 bis 13 µm und besonders bevorzugt von 6 bis 12 µm, jeweils bestimmt durch Laser-Lichtstreuung bei Raumtemperatur an einer Dispersion der Teilchen in Butylacetat mit einem Malvern Mastersizer 2000 mit der Mini-Dispergiereinheit MS1 mit 2000 Umdrehungen pro Minute und mit Auswertung nach Fraunhofer, aufweist.

5. Beschichtungsmittel nach einem der Ansprüche 1 bis 4, **dadurch gekennzeichnet, dass** das Mattierungsmittel (M) auf Kieselgel-Basis ein Porenvolumen von 1,2 bis 2,5 ml/g, bevorzugt von 1,8 bis 2,0 ml/g, aufweist.

6. Beschichtungsmittel nach einem der Ansprüche 1 bis 5, **dadurch gekennzeichnet, dass** das Rheologiehilfsmittel (R) auf Basis hydrophober Kieselsäure eine Primär-Teilchengröße von 2 bis 40 nm, bevorzugt von 5 bis 20 nm, aufweist.

7. Beschichtungsmittel nach einem der Ansprüche 1 bis 6, **dadurch gekennzeichnet, dass** das Rheolögiehilfsmittel (R) auf Basis hydrophober Kieselsäure eine BET-Oberfläche von 35 bis 350 m2/g, bevorzugt von 100 bis 300 m2/g, aufweist.

8. Beschichtungsmittel nach einem der Ansprüche 1 bis 7, **dadurch gekennzeichnet, dass** das Beschichtungsmittel 0,01 bis 3,0 Gew.-%, bevorzugt 0,05 bis 1,5 Gew.-% und besonders bevorzugt 0,10 bis 1,0 Gew.-%, jeweils bezogen auf die nicht flüchtigen Bestandteile des Beschichtungsmittels, mindestens eines Rheologiehilfsmittel (R) auf Basis hydrophober Kieselsäure und/oder dass das Beschichtungsmittel 2 bis 20 Gew.-%, jeweils bezogen auf die nicht flüchtigen Bestandteile des Beschichtungsmittels, mindestens eines Mattierungsmittels (M) enthält.

9. Beschichtungsmittel nach einem der Ansprüche 1 bis 8, **dadurch gekennzeichnet, dass** das Beschichtungsmittel als Vemetzungs mittel (B) eine oder mehrere Verbindungen mit unblockierten und/oder blockierten Isocyanatgruppen und/oder Aminoplastharze und/oder Tris-(Alkoxycarbonylamino)triazine enthält.

10. Beschichtungsmittel nach einem der Ansprüche 1 bis 9, **dadurch gekennzeichnet, dass** das Beschichtungsmittel einen oder mehrere hydroxylgruppenhaltige Polyester und/oder einen oder mehrere hydroxylgruppenhaltige Poly(meth)acrylate als hydroxylgruppenhaltige Verbindung (A) und/oder 1,6-Hexamethylendiisocyanat, Isophorondiisocyanat, und/oder 4,4' -Methylendicyclohexyldiisocyanat und/oder deren Biuret-Dimere und/oder deren Isocyanurat-Trimere als isocyanatgruppenhaltige Verbindung (B) enthält.

11. Beschichtungsmittel nach einem der Ansprüche 1 bis 10, **dadurch gekennzeichnet, dass** die hydroxylgruppenhaltige Verbindung (A) eine OH-Zahl von 80 bis 250 mgKOH/g, bevorzugt von 100 bis 220 mgKOH/g und besonders bevorzugt von 150 bis 200 mgKOH/g aufweist.

12. Beschichtungsmittel nach einem der Ansprüche 1 bis 11, **dadurch gekennzeichnet, dass** das Beschichtungsmittel 30 bis 70 Gew.-%, bevorzugt 40 bis 60 Gew.-% und besonders bevorzugt 45 bis 55 Gew.-%, jeweils bezogen auf die nicht flüchtigen Bestandteile des Beschichtungsmittels, mindestens einer hydroxylgruppenhaltigen Verbindung (A) und/oder 20 bis 50 Gew.-%. bevorzugt 25 bis 45 Gew.-% und besonders bevorzugt 30 bis 40 Gew.-%, jeweils bezogen auf die nicht flüchtigen Bestandteile des Beschichtungsmittels, mindestens eines Vernetzungsmittels (B) mit gegenüber Hydroxylgruppen reaktiven Gruppen enthält.

13. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 12 aufgetragen wird.

14. Effekt- und/oder farbgebende Lackierung aus mindestens einer pigmentierten Beschichtung und einer darauf angeordneten Klarlacklackierung, **dadurch gekennzeichnet, dass** die Klarlacklackierung aus einem Beschichtungsmittel nach einem der Ansprüche 1 bis 12 hergestellt worden ist.

15. Verwendung der Beschichtungsmittel nach einem der Ansprüche 1 bis 12 als Klarlack für die Automobilserien-, Nutzfahrzeug- und/oder Reparaturlackierung und/oder zur Beschichtung von Karosserie-innen- und/oder - Außenbauteilen bzw. Anwendung des Verfahrens nach Anspruch 13 für die Automobilserien-, Nutzfahrzeug- und/oder Reparaturlackierung und/oder zur Beschichtung von Karosserie-innen- und/oder - Außen-bauteilen.

## Claims

1. A clearcoat based on organic solvents and comprising at least one hydroxyl-containing compound (A), at least one crosslinking agent (B) having groups reactive toward hydroxyl groups, and at least one silica gel based matting agent (M), wherein
(i) the silica gel based matting agent (M) is surface-modified with one or more waxes,
and
(ii) the clearcoat further comprises at least one hydrophobic silica based rheological assistant (R) prepared by the surface modification of fumed silicon dioxide with compounds containing hydrophobic groups.

2. The coating composition as claimed in claim 1, wherein the silica gel based matting agent (M) is modified with one or more different, linear, unbranched polyolefin waxes, preferably with one or more different polyethylene waxes.

3. The coating composition as claimed in claim 1 or 2, wherein the wax content of the silica gel based matting agent (M) is between 3% and 20% by weight, preferably between 5% and 15% by weight, based in each case on the total weight of the matting agent.

4. The coating composition as claimed in any of claims 1 to 3, wherein the silica gel based matting agent (M) has an average particle size of 4 to 14 µm, preferably of 5 to 13 µm, and more preferably of 6 to 12 µm, determined in each case by laser light scattering at room temperature on a dispersion of the particles in butyl acetate using a Malvern Mastersizer 2000 with the MS1 mini-dispersing unit at 2000 revolutions per minute and with Fraunhofer evaluation.

5. The coating composition as claimed in any of claims 1 to 4, wherein the silica gel based matting agent (M) has a pore volume of 1.2 to 2.5 ml/g, preferably of 1.8 to 2.0 ml/g.

6. The coating composition as claimed in any of claims 1 to 5, wherein the hydrophobic silica based rheological assistant (R) has a primary particle size of 2 to 40 nm, preferably of 5 to 20 nm.

7. The coating composition as claimed in any of claims 1 to 6, wherein the hydrophobic silica based rheological assistant (R) has a BET surface area of 35 to 350 m²/g, preferably of 100 to 300 m²/g.

8. The coating composition as claimed in any of claims 1 to 7, wherein the coating composition contains 0.01% to 3.0% by weight, preferably 0.05% to 1.5% by weight, and more preferably 0.10% to 1.0% by weight, based in each case on the nonvolatile constituents of the coating composition, of at least one hydrophobic silica based rheological assistant (R) and/or wherein the coating composition contains 2% to 20% by weight, based in each case on the nonvolatile constituents of the coating composition, of at least one matting agent (M).

9. The coating composition as claimed in any of claims 1 to 8, wherein the coating composition comprises as crosslinking agent (B) one or more compounds having nonblocked and/or blocked isocyanate groups, and/or amino resins and/or tris(alkoxycarbonylamino)triazines.

10. The coating composition as claimed in any of claims 1 to 9, wherein the coating composition comprises one or more hydroxyl-containing polyesters and/or one or more hydroxyl-containing poly(meth)acrylates as hydroxyl-containing compound (A), and/or 1,6-hexamethylene diisocyanate, isophorone diisocyanate, and/or 4,4'-methylenedicyclohexyl diisocyanate and/or the biuret dimers thereof and/or the isocyanurate trimers thereof as isocyanate-group-containing compound (B).

11. The coating composition as claimed in any of claims 1 to 10, wherein the hydroxyl-containing compound (A) has an OH number of 80 to 250 mgKOH/g, preferably of 100 to 220 mgKOH/g, and more preferably of 150 to 200 mgKOH/g.

12. The coating composition as claimed in any of claims 1 to 11, wherein the coating composition contains 30% to 70% by weight, preferably 40% to 60% by weight, and more preferably 45% to 55% by weight, based in each case on the nonvolatile constituents of the coating composition, of at least one hydroxyl-containing compound (A) and/or 20% to 50% by weight, preferably 25% to 45% by weight, and more preferably 30% to 40% by weight, based in each case on the nonvolatile constituents of the coating composition, of at least one crosslinking agent (B) having groups reactive toward hydroxyl groups.

13. A multistage coating method wherein an optionally precoated substrate is coated with a pigmented basecoat film and thereafter with a film of the coating composition as claimed in any of claims 1 to 12.

14. An effect and/or color paint system comprising at least one pigmented coating and a clearcoat finish disposed thereon, wherein the clearcoat finish has been produced from a coating composition as claimed in any of claims 1 to 12.

15. The use of the coating composition as claimed in any of claims 1 to 12 as clearcoat for automotive OEM finishing, utility vehicle finishing and/or refinishing and/or for coating interior and/or exterior bodywork components, or application of the method as claimed in claim 13 for automotive OEM finishing, utility vehicle finishing and/or refinishing and/or for coating interior and/or exterior bodywork components.

## Revendications

1. Laque claire à base de solvants organiques, contenant au moins un composé (A) contenant des groupes hydroxyle, au moins un réticulant (B) présentant des groupes réactifs par rapport aux groupes hydroxyle et au moins un agent de matage (M) à base de gel silicique, **caractérisée en ce que**
(i) l'agent de matage (M) à base de gel silicique est modifié en surface par une ou plusieurs cires
et
(ii) la laque claire contient en outre au moins un adjuvant de rhéologie (R) à base de silice hydrophobe, préparé par la modification en surface de dioxyde de silicium pyrogène par des composés présentant des groupes hydrophobes.

2. Agent de revêtement selon la revendication 1, **caractérisé en ce que** l'agent de matage (M) à base de gel silicique est modifié par une ou plusieurs cires de polyoléfine différentes, linéaires non ramifiées, de préférence par une ou plusieurs cires de polyéthylène différentes.

3. Agent de revêtement selon la revendication 1 ou 2, **caractérisé en ce que** la teneur en cire de l'agent de matage (M) à base de gel silicique est située entre 3 et 20% en poids, de préférence entre 5 et 15% en poids, à chaque fois par rapport au poids total de l'agent de matage.

4. Agent de revêtement selon l'une quelconque des revendications 1 à 3, **caractérisé en ce que** l'agent de matage (M) à base de gel silicique présente une grosseur moyenne de particule de 4 à 14 µm, de préférence de 5 à 13 µm et de manière particulièrement préférée de 6 à 12 µm, à chaque fois déterminée par dispersion de la lumière laser à température ambiante sur une dispersion des particules dans de l'acétate de butyle à l'aide d'un Malvern Mastersizer 2000 présentant l'unité de mini-dispersion MS1 à 2000 t/min et par une évaluation selon Fraunhofer.

5. Agent de revêtement selon l'une quelconque des revendications 1 à 4, **caractérisé en ce que** l'agent de matage (M) à base de gel silicique présente un volume de pores de 1,2 à 2,5 ml/g, de préférence de 1,8 à 2,0 ml/g.

6. Agent de revêtement selon l'une quelconque des revendications 1 à 5, **caractérisé en ce que** l'adjuvant de rhéologie (R) à base de silice hydrophobe présente une grosseur des particules primaires de 2 à 40 nm, de préférence de 5 à 20 nm.

7. Agent de revêtement selon l'une quelconque des revendications 1 à 6, **caractérisé en ce que** l'adjuvant de rhéologie (R) à base de silice hydrophobe présente une surface BET de 35 à 350 m²/g, de préférence de 100 à 300 m²/g.

8. Agent de revêtement selon l'une quelconque des revendications 1 à 7, **caractérisé en ce que** l'agent de revêtement contient 0,01 à 3,0% en poids, de préférence 0,05 à 1,5% en poids et de manière particulièrement préférée 0,10 à 1,0% en poids, à chaque fois par rapport aux constituants non volatils de l'agent de revêtement, d'au moins un adjuvant de rhéologie (R) à base de silice hydrophobe et/ou **en ce que** l'agent de revêtement contient 2 à 20% en poids, à chaque fois par rapport aux constituants non volatils de l'agent de revêtement, d'au moins un agent de matage (M).

9. Agent de revêtement selon l'une quelconque des revendications 1 à 8, **caractérisé en ce que** l'agent de revêtement contient, comme réticulants (B), un ou plusieurs composés présentant des groupes isocyanate non bloqués et/ou bloqués et/ou des résines d'aminoplaste et/ou des tris-(alcoxycarbonylamino)triazines.

10. Agent de revêtement selon l'une quelconque des revendications 1 à 9, **caractérisé en ce que** l'agent de revêtement contient un ou plusieurs polyesters contenant des groupes hydroxyle et/ou un ou plusieurs poly(méth)acrylates contenant des groupes hydroxyle comme composé (A) contenant des groupes hydroxyle et/ou du diisocyanate de 1,6-hexaméthylène, du diisocyanate d'isophorone et/ou du diisocyanate de 4,4'-méthylènedicyclohexyle et/ou leurs dimères de biuret et/ou leurs trimères d'isocyanurate comme composé (B) contenant des groupes isocyanate.

11. Agent de revêtement selon l'une quelconque des revendications 1 à 10, **caractérisé en ce que** le composé contenant des groupes hydroxyle (A) présente un indice d'OH de 80 à 250 mg de KOH/g, de préférence de 100 à 220 mg de KOH/g et de manière particulièrement préférée de 150 à 200 mg de KOH/g.

12. Agent de revêtement selon l'une quelconque des revendications 1 à 11, **caractérisé en ce que** l'agent de revêtement contient 30 à 70% en poids, de préférence 40 à 60% en poids et de manière particulièrement préférée 45 à 55% en poids, à chaque fois par rapport aux constituants non volatils de l'agent de revêtement, d'au moins un composé (A) contenant des groupes hydroxyle et/ou 20 à 50% en poids, de préférence 25 à 45% en poids et de manière particulièrement préférée 30 à 40% en poids, à chaque fois par rapport aux constituants non volatils de l'agent de revêtement, d'au moins un réticulant (B) présentant des groupes réactifs par rapport aux groupes hydroxyle.

13. Procédé de revêtement à plusieurs étapes, **caractérisé en ce qu'**on applique, sur un substrat le cas échéant revêtu au préalable, une couche de laque de base pigmentée, puis une couche de l'agent de revêtement selon l'une quelconque des revendications 1 à 12.

14. Laquage conférant un effet et/ou une couleur constitué par au moins un revêtement pigmenté et un laquage de laque claire disposé sur celui-ci, **caractérisé en ce que** le laquage de laque claire a été préparé à partir d'un agent de revêtement selon l'une quelconque des revendications 1 à 12.

15. Utilisation de l'agent de revêtement selon l'une quelconque des revendications 1 à 12 comme laque claire pour le laquage en série de voitures, le laquage de véhicules utilitaires et/ou le laquage de réparation et/ou pour le revêtement de pièces internes et/ou externes de carrosseries ou utilisation du procédé selon la revendication 13 pour le laquage en série de voitures, le laquage de véhicules utilitaires et/ou le laquage de réparation et/ou pour le revêtement de pièces internes et/ou externes de carrosseries.
